(19) Europäisches Patentamt
European Patent Office
Office européen des brevets

(11) EP 4 219 616 A1

(12) **EUROPEAN PATENT APPLICATION**
published in accordance with Art. 153(4) EPC

(43) Date of publication:
**02.08.2023 Bulletin 2023/31**

(21) Application number: **21872617.2**

(22) Date of filing: **27.09.2021**

(51) International Patent Classification (IPC):
***C08L 13/02*** *(2006.01)* ***B29C 41/14*** *(2006.01)*
***B29C 41/36*** *(2006.01)* ***C08G 59/42*** *(2006.01)*
***C08K 3/22*** *(2006.01)* ***C08L 63/00*** *(2006.01)*

(52) Cooperative Patent Classification (CPC):
**B29C 41/14; B29C 41/36; C08G 59/42; C08K 3/22; C08L 13/02; C08L 63/00**

(86) International application number:
**PCT/JP2021/035405**

(87) International publication number:
**WO 2022/065491 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.09.2020 JP 2020161304**

(71) Applicants:
- **Midori Anzen Co., Ltd.**
  **Tokyo 150-8455 (JP)**
- **BST Specialty Co., Ltd.**
  **Sathorn, Bangkok, 10120 (TH)**

(72) Inventors:
- **ENOMOTO, Norihide**
  **Tokyo 150-8455 (JP)**
- **MORINAGA, Atsushi**
  **Tokyo 150-8455 (JP)**
- **TAKEUCHI, Yamato**
  **Tokyo 150-8455 (JP)**
- **OTA, Hisanori**
  **Bangkok, 10120 (TH)**

(74) Representative: **Gill Jennings & Every LLP**
**The Broadgate Tower**
**20 Primrose Street**
**London EC2A 2ES (GB)**

(54) **COMPOSITION FOR DIP MOLDING AND MOLDED BODY THEREOF**

(57) Provided is a dip molding composition containing at least a nitrile rubber elastomer containing a carboxyl group and an amide group. In this dip molding composition, the elastomer contains 50% by weight or more, 78% by weight or less of a conjugated diene monomer-derived structural unit, 17% by weight or more, 35% by weight or less of an ethylenically unsaturated nitrile monomer-derived structural unit, 2.0% by weight or more, 8.0% by weight or less of an ethylenically unsaturated carboxylic acid monomer-derived structural unit, and 0.5% by weight or more, 5.0% by weight or less of an amide group-containing monomer-derived structural unit, and has an MEK-insoluble content of 50% by weight or more, 80% by weight or less.

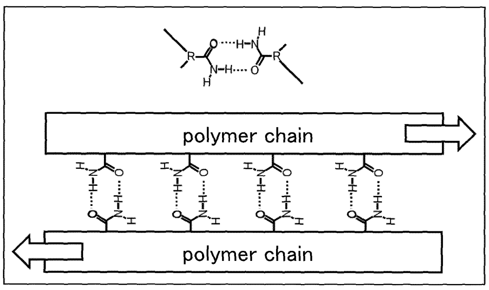


FIG. 1

EP 4 219 616 A1

## Description

TECHNICAL FIELD

The present invention relates to a dip molding composition and a molded article thereof.

BACKGROUND ART

Molded articles obtained by dip molding a latex composition of natural rubber or synthetic rubber, such as gloves, condoms, catheters, tubes, balloons, nipples, and fingerstalls, are known.

Molded articles obtained from natural rubber have a high stress retention rate inherent to rubber and are flexible with excellent rubber elasticity; however, since natural rubber latexes contain a protein that causes type I allergic symptoms in the human body, many problems have been reported in such products that come into direct contact with the human body.

On the other hand, molded articles obtained from synthetic rubbers do not contain such a protein and are thus advantageous in that they have little problem relating to type I allergy. As the synthetic rubbers, isoprene rubber, chloroprene rubber, and carboxyl group-containing acrylonitrile-butadiene rubber (XNBR) are known. Thereamong, isoprene rubber has a structure similar to that of natural rubber, as well as a stress retention rate and a flexible rubber elasticity that are comparable to those of natural rubber. Further, chloroprene rubber is structurally butadiene rubber that is partially chlorinated, and has a high stress retention rate and a flexible rubber elasticity similarly to those of isoprene rubber. However, these rubbers both have a drawback of being very expensive.

Isoprene monomer, which is a raw material of isoprene rubber, is produced by dimerization of propylene, dehydrogenation of isoamylene, solvent extraction of C5 fraction, or the like, and requires chemical reactions and a complex production process as opposed to butadiene monomer that is obtained in a large amount from rectification of C4 fraction in the petroleum production. Further, polymerization of isoprene monomer is performed by solution polymerization and, after isoprene rubber is produced, a solvent is separated and the resultant is emulsified with water, whereby an isoprene rubber latex for dipping is obtained. In this manner, in order to obtain a molded article from isoprene rubber, a production process including a variety of chemical reactions is required.

Meanwhile, chloroprene monomer is industrially mainly produced by a method in which monovinylacetylene obtained by dimerization of acetylene is allowed to undergo an addition reaction with hydrochloric acid, and thus cannot be produced inexpensively.

XNBR, which is obtained by copolymerization of butadiene, acrylonitrile and an unsaturated carboxylic acid, can be inexpensively mass-produced and is thus often used in the production of dip-molded articles. Conventionally, molded articles were produced by covalently bonding butadiene residues using sulfur and a vulcanization accelerator and ionically crosslinking carboxyl groups (X) with zinc; however, since type IV allergy caused by a vulcanization accelerator has become a problem, accelerator-free molded articles in which neither sulfur nor vulcanization accelerator is used have been proposed in recent years. For example, dip-molded articles obtained by self-crosslinking of a crosslinkable organic compound (Patent Document 1), crosslinking using an organic crosslinking agent such as a polycarbodiimide compound or an epoxy compound (Patent Documents 2 and 3), or crosslinking using a metal crosslinking agent such as aluminum, which is similar to covalent bonding (Patent Document 4), have been proposed.

As described above, XNBR is obtained by copolymerization of butadiene, acrylonitrile, and an unsaturated carboxylic acid. The double bonds of butadiene are responsible for the properties of rubber. In this sense, butadiene is a component serving as a base. Acrylonitrile and the unsaturated carboxylic acid are components that modify the properties of XNBR through copolymerization with butadiene and, depending on the content of these components, a variety of properties such as chemical resistance, tensile strength, elongation rate, and modulus can be modified.

Further, in XNBR, the film forming properties of a latex obtained therefrom, the ease of production, and the physical properties are affected by adjusting the polymerization temperature, a chain transfer agent, a polymerization method, and a polymerization conversion rate.

Taking gloves as an example, in recent years, XNBR produced by low-temperature polymerization has been mainly used to improve the tensile strength of thin gloves, yielding molded articles having satisfactory tensile strength and elongation rate. By the low-temperature polymerization, XNBR is made into a linear polymer, and the tensile strength of XNBR itself is improved. In addition, in the resulting linear XNBR latex, when the pH is brought to the alkaline side, the carboxylic acid of XNBR is easily ionized to generate carboxylate ions and these carboxylate ions are oriented to the surfaces of XNBR particles, so that metal ion crosslinks are likely to be formed by metal ions, and the interparticle strength is improved. On the other hand, in the linear XNBR, since the rubber elasticity is lower than that of a branched XNBR, the rubber elasticity in terms of stress retention rate and flexibility as basic physical properties is much inferior to that of natural rubber.

RELATED ART DOCUMENTS

PATENT DOCUMENTS

[Patent Document 1] WO 2012/043894
[Patent Document 2] WO 2017/217542
[Patent Document 3] WO 2019/194056
[Patent Document 4] Japanese Unexamined Patent Application Publication No. 2018-9272

SUMMARY OF THE INVENTION

PROBLEMS TO BE SOLVED BY THE INVENTION

An object of the present invention is to produce a molded article which can attain rubber-inherent properties similar to those of natural rubber and is excellent in at least one property of stress retention rate, flexibility, elongation, or strength by crosslinking of XNBR using an organic crosslinking agent and a metal crosslinking agent and subsequent dip molding.

MEANS FOR SOLVING THE PROBLEMS

Aiming at achieving the above-described object, the present inventors studied formulations and polymerization methods of XNBR and examined the above-described problems. At the same time, considering that there is a limit to the improvement of the rubber physical properties in conventional XNBR, the present inventors examined so-called XYNBR in which a new fourth component is added.

The present inventors discovered that this novel XYNBR can solve the problems of conventional XNBR, and that, depending on an embodiment, the novel XYNBR can yield a glove that practically satisfies the strength, elongation, and flexibility according to the ASTM D412 Standard for surgical gloves, as well as a glove that satisfies the strength required for an ultrathin glove even when the XYNBR is a hot rubber and has a highly branched structure.

[1] A dip molding composition, containing at least a nitrile rubber elastomer containing a carboxyl group and an amide group,
wherein

the elastomer contains 50% by weight or more,78% by weight or less of a conjugated diene monomer-derived structural unit, 17% by weight or more, 35% by weight or less of an ethylenically unsaturated nitrile monomer-derived structural unit, 2.0% by weight or more, 8.0% by weight or less of an ethylenically unsaturated carboxylic acid monomer-derived structural unit, and 0.5% by weight or more, 5.0% by weight or less of an amide group-containing monomer-derived structural unit, and
the elastomer has an MEK-insoluble content of 50% by weight or more, 80% by weight or less.

[2] The dip molding composition according to [1], further containing at least:

an epoxy crosslinking agent containing an epoxy compound that contains three or more glycidyl ether groups in one molecule and has a basic skeleton containing an alicyclic, aliphatic, or aromatic hydrocarbon; and
a pH modifier,
wherein the epoxy crosslinking agent has an MIBK/water distribution ratio of 50% or higher as determined by the following measurement method:

Method of measuring the MIBK/water distribution ratio: in a test tube, 5.0 g of water, 5.0 g of methyl isobutyl ketone (MIBK), and 0.5 g of the epoxy crosslinking agent are precisely weighed and mixed with stirring at 23°C $\pm$ 2°C for 3 minutes, and the resulting mixture is centrifuged at $1.0 \times 10^3$ G for 10 minutes and thereby separated into an aqueous layer and an MIBK layer, after which the MIBK layer is fractionated and weighed to calculate the MIBK/water distribution ratio using the following equation:

$$\text{MIBK/water distribution ratio (\%)} = (\text{Weight of separated MIBK layer (g)} - \text{Weight of MIBK before separation (g)})/\text{Weight of added crosslinking agent (g)} \times 100$$

this measurement is performed three times, and an average value thereof is defined as the MIBK/water distribution ratio.

[3] The dip molding composition according to [1] or [2], wherein, in the elastomer, the content ratio of the ethylenically unsaturated carboxylic acid monomer-derived structural unit is 3.5% by weight or more, 6% by weight or less, and the content ratio of the amide group-containing monomer-derived structural unit is 1% by weight or more, 3% by weight or less.
[4] The dip molding composition according to any one of [1] to [3], wherein the content ratio of the ethylenically unsaturated nitrile monomer-derived structural unit is 20% by weight or more, 30% by weight or less.
[5] The dip molding composition according to any one of [1] to [4], wherein the MEK-insoluble content of the elastomer is not less than 60% by weight.
[6] The dip molding composition according to any one of [1] to [5], wherein the amide group-containing monomer-derived structural unit is a structural unit derived from an *N*-alkylamide monomer or an N-alkyl ketone amide monomer.
[7] The dip molding composition according to [6], wherein the structural unit derived from an *N*-alkylamide monomer or an N-alkyl ketone amide monomer is a (meth)acrylamide monomer-derived structural unit or a diacetone acrylamide monomer-derived structural unit.
[8] The dip molding composition according to any one of [1] to [7], wherein the epoxy crosslinking agent is added in an amount of 0.3 parts by weight or more, 2.5 parts by weight or less with respect to 100 parts by weight of the elastomer.
[9] The dip molding composition according to any one of [1] to [8], wherein the pH is adjusted to be 9.0 or higher, 10.5 or lower by the pH modifier.
[10] The dip molding composition according to any one of [1] to [9], further containing a metal crosslinking agent, wherein the metal crosslinking agent is zinc oxide.
[11] The dip molding composition according to [10], wherein zinc oxide is added in an amount of 0.2 parts by weight or more, 1.5 parts by weight or less with respect to 100 parts by weight of the elastomer.
[12] The dip molding composition according to any one of [1] to [11], having an MEK swelling rate of 5 times or more, 10 times or less.
[13] A molded article, which is a cured product of the dip molding composition according to any one of [1] to [12].
[14] The molded article according to [13], having a stress retention rate of 40% or higher as determined by the following measurement method:
Method of measuring the stress retention rate: in accordance with ASTM D412, a test piece is prepared, marked with lines at a gauge mark distance of 25 mm, and stretched at a chuck distance of 90 mm and a tensile speed of 500 mm/min; once the test piece is stretched two-fold, the stretching is terminated to measure a stress M0; the test piece is maintained and a stress M6 is measured after a lapse of 6 minutes; and the stress retention rate is calculated using the following equation:

$$\text{Stress retention rate (\%)} = (M6/M0) \times 100.$$

[15] The molded article according to [13] or [14], which is a glove.
[16] A method of producing a molded article, the method including:

(1) the coagulant adhesion step of allowing a coagulant to adhere to a glove forming mold;
(2) the maturation step of preparing and stirring the dip molding composition according to any one of [1] to [12];
(3) the dipping step of immersing the glove forming mold in the dip molding composition;
(4) the gelling step of gelling a film formed on the glove forming mold to prepare a cured film precursor;
(5) the leaching step of removing impurities from the cured film precursor thus formed on the glove forming mold;
(6) the beading step of making a roll in a cuff portion of a glove to be obtained; and
(7) the curing step of heating and drying the cured film precursor at a temperature required for crosslinking reaction,

which steps (3) to (7) are performed in the order mentioned.
[17] A dip molding composition, containing at least:

a nitrile rubber elastomer containing a carboxyl group and an amide group;
an epoxy crosslinking agent containing an epoxy compound that contains three or more glycidyl ether groups in one molecule and has a basic skeleton containing an alicyclic, aliphatic, or aromatic hydrocarbon; and
a pH modifier,
the elastomer contains 50% by weight or more, 78% by weight or less of a conjugated diene monomer-derived structural unit, 17% by weight or more, 35% by weight or less of an ethylenically unsaturated nitrile monomer-derived structural unit, 2.0% by weight or more, 8.0% by weight or less of an ethylenically unsaturated carboxylic acid monomer-derived structural unit, and 0.5% by weight or more, 5.0% by weight or less of an amide group-containing monomer-derived structural unit, and
the epoxy crosslinking agent has an MIBK/water distribution ratio of 50% or higher as determined by the following measurement method:

Method of measuring the MIBK/water distribution ratio: in a test tube, 5.0 g of water, 5.0 g of methyl isobutyl ketone (MIBK), and 0.5 g of the epoxy crosslinking agent are precisely weighed and mixed with stirring at 23°C ± 2°C for 3 minutes, and the resulting mixture is centrifuged at $1.0 \times 10^3$ G for 10 minutes and thereby separated into an aqueous layer and an MIBK layer, after which the MIBK layer is fractionated and weighed to calculate the MIBK/water distribution ratio using the following equation:

$$\text{MIBK/water distribution ratio (\%)} = (\text{Weight of separated MIBK layer (g)} - \text{Weight of MIBK before separation (g)})/\text{Weight of added crosslinking agent (g)} \times 100$$

this measurement is performed three times, and an average value thereof is defined as the MIBK/water distribution ratio.

EFFECTS OF THE INVENTION

According to the dip molding composition of the present invention, by using a nitrile rubber elastomer containing a carboxyl group and an amide group as a material in dip molding, a glove that is excellent in at least one property of tensile strength, elongation, and flexibility, which are basic physical properties required for a glove, or stress retention rate that can be imparted by the highly branched structure of the elastomer, can be provided. Further, this glove can be produced using neither a latex protein that causes type I allergy nor a vulcanization accelerator that causes type IV allergy.
The present invention can be applied to not only gloves, but also molded articles such as condoms, catheters, tubes, balloons, nipples, and fingerstalls.

BRIEF DESCRIPTION OF THE DRAWING

[FIG. 1] FIG. 1 is a drawing that illustrates interaction of amide groups between polymer chains.

MODE FOR CARRYING OUT THE INVENTION

Embodiments of the present invention will now be described in detail; however, the following descriptions are merely examples (representative examples) of the embodiments of the present invention, and the present invention is not limited to the contents thereof as long as they do not depart from the gist of the present invention.
It is noted here that, "weight" and "mass" have the same meaning and are thus hereinafter collectively stated as "weight".
In the present specification, unless otherwise specified, "%" means "% by weight" and "part(s)" means "part(s) by weight".
Further, unless otherwise specified, in principle, "part(s) by weight" indicates the number of parts by weight with respect to 100 parts by weight of an elastomer.
In the present specification, those ranges that are stated with "to" before and after numerical or physical property values each denote a range that includes the respective values stated before and after "to".
In one embodiment of the present invention, an elastomer having a highly branched structure, which characterizes the present invention and is a nitrile rubber elastomer containing a carboxyl group and an amide group (hereinafter, also referred to as "XYNBR"), is used. A dip molding composition (hereinafter, also simply referred to as "dipping liquid") used for producing a dip-molded article (hereinafter, also simply referred to as "molded article") by crosslinking the elastomer using an organic crosslinking agent or a metal crosslinking agent, a method of producing a molded article

using the same, and a molded article produced by the method will now be described. In the present embodiment, by adjusting not only the formulation and the ratio of the XYNBR and the degree of crosslinked structures (branched structures) but also the amount of the epoxy crosslinking agent or the metal crosslinking agent to be added, a molded article that is superior to a conventional XNBR glove in terms of at least one (preferably two or more) of strength, elongation (hereinafter, also referred to as "elongation rate"), flexibility, or stress retention rate can be obtained.

1. Dip Molding Composition

The dip molding composition according to the present embodiment, as sequentially described below, contains an XYNBR as an indispensable component, is usually in the form of a mixed solution with water, and also contains a pH modifier. In addition, the dip molding composition according to the present embodiment further contains an epoxy crosslinking agent or a crosslinking agent such as zinc oxide (particularly an epoxy crosslinking agent), and may contain other components as well.

(1) Nitrile Rubber Latex Containing Carboxyl Group and Amide Group (XYNBR)

The XYNBR of the present invention is characterized by containing an amide group as opposed to conventional XNBRs, and having a structure that includes a large number of polymer branches for providing rubber elasticity.

<Characteristics of Amide Group-Containing XNBR>

(Characteristics in Polymer Production)

In the emulsion polymerization of an ordinary XNBR, since butadiene and acrylonitrile are lipophilic while methacrylic acid is hydrophilic, it is difficult to copolymerize these components in an aqueous phase. Accordingly, there is a problem that only a portion of added methacrylic acid is incorporated into particles and particle interfaces and copolymerized, and the remaining methacrylic acid forms a homopolymer in an aqueous phase to increase the viscosity, induce an aggregation effect, and cause irritation to the skin. In addition, since the methacrylic acid is not uniformly incorporated into the resulting polymer main chain and is thus unevenly distributed near the particle interfaces, there is also a problem that the sites of crosslinking with a crosslinking agent are unevenly distributed.

On the other hand, when a lipophilic compound such as methacrylamide is used as an amide group-containing monomer, since this compound is lipophilic, it exists in the vicinities of butadiene and acrylonitrile and is thus uniformly incorporated into the resulting polymer chains, so that interactions can be provided between the polymer chains. Therefore, by replacing a portion of methacrylic acid with methacrylamide, the amount of methacrylic acid to be used can be reduced, and the residual amount of methacrylic acid can thus be reduced. In addition, by reducing the amount of free carboxylic acid, the amount of an alkali in a pH modifier used for pH adjustment of a dipping liquid can also be reduced, as a result of which the water resistance of the resulting molded article can be improved.

(Structure of Molded Article Obtained from XYNBR)

In an ordinary XNBR, ionic bonds formed by carboxylic acid via metal ions are constructed via positively charged ions and covalent bonds are formed by an organic crosslinking agent; however, in an XYNBR, in addition to these bonds, amide groups that are relatively uniformly distributed in the polymer chains form hydrogen bonds by acting as both donors and acceptors. The NH proton moiety of an amide group of an amide group-containing monomer such as methacrylamide (a case of using methacrylamide as a representative amide group-containing monomer is described below; however, "methacrylamide" may be read as "amide group-containing monomer") shows a positive polarity while the O (oxygen) moiety of the amide group shows a negative polarity, and these moieties form a hydrogen bond in a head-to-tail manner. Such hydrogen bonds formed by amide groups between polymer chains are constructed more effectively by once applying an energy to the polymer and bringing the polymer chains into a mobility-improved state. The state of the interactions of amide groups between polymer chains is illustrated in FIG. 1.

(Characteristics of Molded Article Obtained from XYNBR)

A molded article obtained from XYNBR is believed to have the following characteristics because of the above-described interactions of methacrylamide-derived amide groups between polymer chains.

Hydrogen bonds formed by the methacrylamide-derived amide groups are uniformly incorporated into the resulting polymer between polymer chains; therefore, when a stress in a certain direction is applied to the hydrogen bonds formed between the surrounding polymer chains, a so-called sliding phenomenon in which the hydrogen bonds

are broken but regenerated by other amide groups occurs. Because of this sliding effect, a strain stress can be dissipated without being concentrated at one spot, so that the strength at break is increased.

In addition, by this sliding effect, the hydrogen bonds are modified to assume a stable structure in accordance with the direction of stress, so that the elongation is improved.

Methacrylamide generates more interactions without any metal ion as compared to methacrylic acid; therefore, it can reduce the modulus and make the molded article flexible.

Since the interactions of methacrylamide-derived amide groups allow the polymer chains to slide, the resulting deformation is plastic deformation and, therefore, the retention of stress is unlikely to be improved. With respect to this point, if necessary, it can be complemented by adopting a highly branched polymer structure so as to impart a rubber elasticity.

Moreover, a molded article produced using a dip molding composition that contains an elastomer having an amide group-containing monomer-derived structural unit is capable of maintaining excellent physical properties, particularly a high tensile strength and a high tear strength, even after long-term storage.

By using an XYNBR having the above-described characteristic features as a base, a molded article having properties that could not be attained with a conventional XNBR polymer, particularly a good balance of strength, elongation, and flexibility depending on an embodiment, can be produced. The use of the XYNBR also enables to satisfy the ASTM Standard, particularly an elongation of 650% or more, which could not be achieved by a conventional XNBR glove. Further, in an ultrathin glove which conventionally could not be produced from a branched XNBR that is a hot rubber, a strength can be exerted as well. Moreover, by adjusting the formulation and the degree of branched structures of the XYNBR as well as the selection and the amount of a crosslinking agent to be added, a polar glove having particularly preferred properties can be produced.

<Crosslinked Structures of Nitrile Rubber Elastomer Containing Carboxyl Group and Amide Group>

The crosslinked structures of an elastomer contained in a latex that are described in this section are common to a nitrile rubber elastomer containing a carboxyl group (XNBR) and a nitrile rubber elastomer containing a carboxyl group and an amide group (XYNBR). It is desired that an elastomer contained in a nitrile rubber latex composition containing a carboxyl group and an amide group be provided with an MEK-insoluble content of 50% by weight or more, 80% by weight or less by introducing crosslinked structures in advance at the time of emulsion polymerization. The crosslinked structures introduced in the polymerization step of the latex composition improves the crosslink density of a dip-molded article and contributes to an improvement of the tensile density. By using this latex composition, a dip-molded article which has a high tensile strength despite being molded from a synthetic rubber latex composition can be provided.

A technology of obtaining desired performance by introducing crosslinked structures to an elastomer contained in a latex composition in advance and thereby providing a minimum required amount of crosslinked structures at the time of an immersion process has been generally known as a pre-vulcanization technology for natural rubber latex compositions; however, in a synthetic rubber latex composition, it is difficult to obtain appropriate physical properties using such a technology since the film-forming properties of a synthetic rubber latex composition are greatly inferior to those of a natural rubber latex composition. In the case of producing a molded article by an immersion process using a synthetic rubber latex composition such as a carboxyl group-containing nitrile rubber latex composition, it is required to introduce crosslinked structures concurrently with the film forming step. Conventionally, there are occasionally cases where an immersion-processed article is produced using a partially crosslinked synthetic latex composition; however, when an immersion process using a synthetic rubber latex composition having 50% by weight or more of crosslinked structures is performed prior to the film forming step, there are problems that the resulting dip-molded article has poor physical strength and its durability is greatly reduced.

The composition according to the present embodiment already has crosslinked structures in a synthetic latex composition; therefore, a dip-molded article having satisfactory physical properties and performance can be obtained therefrom only by introducing a minimum amount of crosslinked structures during the production of the dip-molded article. In addition, the dip-molded article obtained in this manner characteristically has excellent tensile strength.

In the present invention, the crosslinked structures provided in the step of polymerizing the elastomer contained in the synthetic latex composition is preferably at a level of 50% by weight or more, 80% by weight or less of all crosslinked structures that are eventually introduced. The crosslinked structures introduced in the step of polymerizing the elastomer contained in the synthetic latex composition are different from those crosslinked structures introduced during molding of a general latex or rubber in terms of chemical bond type and, when a polymerization reaction proceeds by way of radical polymerization, crosslinked structures can be controlled and generated by addition of radicals to polymer side chains, chain transfer, and the like. The crosslinked structures generated in the polymerization step of the synthetic latex composition are, for example, carbon-carbon bonds, ester bonds, hydrogen bonds, or coordination structures, and carbon-carbon bonds are stronger and provide a final molded article with an improved tensile strength.

The degree of crosslinked structures can be determined by, as a measurement method having good reproducibility, measuring the degree of dissolution of a polymer in a solvent that has a polarity similar to that of the polymer. When the polymer is an acrylonitrile-butadiene rubber containing a carboxyl group and an amide group (XYNBR), the degree of crosslinked structures can be estimated by measuring the amount of insoluble components using methyl ethyl ketone (MEK) as the solvent. When a dip-molded article has an MEK-soluble content of 1% by weight or less and a synthetic latex composition has an MEK-insoluble content of 50% by weight, it can be presumed that about 50% of crosslinked structures are introduced in the production process of the dip-molded article. The MEK-insoluble content serves as an index for determining the extent of the formation of crosslinked structures in a polymer structure.

In order to improve the tensile strength as well as the stress retention rate of a dip-molded article in which a nitrile rubber elastomer containing a carboxyl group and an amide group is used, it is effective to increase the amount of crosslinked structures contained in the dip-molded article. This is because an increase in the amount of crosslinked structures leads to an increase in the number of bonds formed by crosslinking, and this reduces the stress applied to each crosslinked structure and thereby increases the tensile strength, and also because, in a dip-molded article having an increased amount of crosslinked structures, the molecular chains are strongly entangled with each other, and this makes the molecular chains unlikely to be disentangled when stretched and allows the original molecular structure to be restored, as a result of which so-called rubber elasticity is enhanced and the stress retention rate is improved.

A synthetic latex composition is usually obtained by mixing latex particles and water. The latex particles are usually covered with a surfactant, and they are in the form of being arranged in layers when the composition is eventually dehydrated to form a film. In the present specification, the term "interparticle" is used for gaps between the latex particles arranged in layers while the inside of each particle is referred to as "intraparticle", and these terms are distinguished from one another. As compared to a natural rubber latex composition, a synthetic latex composition has a problem in that the interparticle bonds are weak. An elastomer having a large amount of crosslinked structures can be further crosslinked using a crosslinking agent suitable for intraparticle crosslinking when a large amount of carboxyl groups are incorporated into the particles of the elastomer, whereby the crosslink density can be increased and the tensile strength as well as the stress retention rate can be further improved in the resulting molded article. Meanwhile, the weakness of interparticle bonds, which is common to synthetic latex compositions, is conventionally complemented by a metal crosslinking agent such as zinc. As for the elastomer according to the present embodiment, the weakness of interparticle bonds can also be resolved by crosslinks formed by, for example, an epoxy crosslinking agent that is capable of partially forming crosslinks between particles as well. In addition, the weakness of interparticle bonds can be resolved by further adding a metal crosslinking agent such as zinc. This elastomer is highly pH-dependent since a large amount of carboxyl groups exist in its particles. In other words, the properties of the resulting molded article vary depending on whether the carboxyl groups, which serve as crosslinking points of the crosslinking agents, exist at the interfaces or the inside of the particles of the elastomer. Usually, the pH of a latex is adjusted at about 8.3, and the elastomer thus contains a large amount of carboxyl groups inside its particles. The carboxyl groups remain inside the particles when the pH of the dip molding composition is eventually adjusted to be lower than 9.0; therefore, the stress retention rate is increased, and the tensile strength is reduced due to a condition where the amount of carboxyl groups is small at the particle interfaces. On the other hand, when the pH of the dip molding composition is higher than 10.5, the opposite happens since a large amount of the carboxyl groups inside the particles move to the particle interfaces. Accordingly, in the present invention, it is desired to adjust the pH of the dip molding composition to be 9.0 or higher, 10.5 or lower using a pH modifier.

<Formulation of Nitrile Rubber Elastomer Containing Carboxyl Group and Amide Group>

The formulation of the nitrile rubber elastomer containing a carboxyl group and an amide group contains a conjugated diene monomer-derived structural unit, an ethylenically unsaturated carboxylic acid monomer-derived structural unit, an ethylenically unsaturated nitrile monomer-derived structural unit, and an amide group-derived structural unit as indispensable structural units, and may optionally further contain other copolymerizable monomer-derived structural units.

The monomers will now be described.

(Conjugated Diene Monomer)

The conjugated diene monomer used in the present embodiment is not particularly limited as long as it is radically polymerizable. Specific examples of the conjugated diene monomer include 1,3-butadiene, isoprene, 2,3-dimethyl-1,3-butadiene, 2-ethyl-1,3-butadiene, 1,3-pentadiene, and chloroprene. Any of these conjugated diene monomers may be used singly, or two or more thereof may be used in combination. The conjugated diene monomer-derived structural unit is an element that mainly imparts flexibility to a molded article. The content ratio of the conjugated diene monomer with respect to all monomers (or the content ratio of the conjugated diene monomer-derived structural unit in the elastomer) is usually 50% by weight or more, 78% by weight or less, preferably 60% by weight or more, 75% by

weight or less.

(Ethylenically Unsaturated Nitrile Monomer)

The ethylenically unsaturated nitrile monomer used in the present embodiment may be any monomer that contains a combination of a polymerizable unsaturated bond and a nitrile group in one molecule, and examples of such a monomer include acrylonitrile, methacrylonitrile, fumaronitrile, $\alpha$-chloroacrylonitrile, and $\alpha$-cyanoethylacrylonitrile. Thereamong, acrylonitrile and methacrylonitrile are preferred, and acrylonitrile is more preferred. The ethylenically unsaturated nitrile monomer-derived structural unit is a component that mainly imparts strength to a molded article, and an excessively small amount thereof leads to insufficient strength, whereas an excessively large amount thereof improves the chemical resistance but makes the molded article overly hard. The content ratio of the ethylenically unsaturated nitrile monomer with respect to all monomers (or the content ratio of the ethylenically unsaturated nitrile monomer-derived structural unit in the elastomer) is usually 17% by weight or more, 35% by weight or less, preferably 20% by weight or more, 30% by weight or less, more preferably 21% by weight or more, 28% by weight or less. An increase in the amount of the ethylenically unsaturated nitrile monomer is relatively unlikely to increase the modulus and has substantially no effect on the stress retention rate; therefore, the amount of the ethylenically unsaturated nitrile monomer can be set as appropriate within the above-described range in accordance with the intended use in terms of chemical resistance, film thickness, and the like.

(Ethylenically Unsaturated Carboxylic Acid Monomer)

The ethylenically unsaturated carboxylic acid monomer-derived structural unit serves as a crosslinking point with a crosslinking agent. The type of the ethylenically unsaturated carboxylic acid monomer is not particularly limited, and the ethylenically unsaturated carboxylic acid monomer may be a monocarboxylic acid or a polycarboxylic acid. Specific examples thereof include acrylic acid, methacrylic acid, itaconic acid, maleic acid, fumaric acid, maleic anhydride, and citraconic anhydride, among which acrylic acid and methacrylic acid are preferred. Any of these ethylenically unsaturated carboxylic acid monomers may be used singly, or two or more thereof may be used in any combination at any ratio. The content ratio of the ethylenically unsaturated carboxylic acid monomer with respect to all monomers (or the content ratio of the ethylenically unsaturated carboxylic acid monomer-derived structural unit in the elastomer) is usually 2.0% by weight or more, 8.0% by weight or less, preferably 3.5% by weight or more, 6.0% by weight or less, more preferably 3.5% by weight or more, 5.0% by weight or less, still more preferably 3.5% by weight or more, 4.5% by weight or less. An increase in the amount of the ethylenically unsaturated carboxylic acid monomer causes a large increase in the modulus; therefore, it is preferred to reduce the amount of the ethylenically unsaturated carboxylic acid monomer as much as possible such that the above-described range is achieved.

(Amide Group-Containing Monomer)

An amide group-containing monomer can be used in addition to the above-described ethylenically unsaturated carboxylic acid monomer.

The type of the amide group-containing monomer is not particularly limited and, for example, an *N*-alkylamide monomer or an N-alkyl ketone amide monomer, examples of which include a (meth)acrylamide monomer and a diacetone acrylamide monomer, can be used. The content ratio of the amide group-containing monomer with respect to all monomers (or the content ratio of an amide group-containing monomer-derived structural unit in the elastomer) is usually 0.5% by weight or more, 5.0% by weight or less, preferably 1% by weight or more, 3% by weight or less.

Next, a molded article (particularly a film-form molded article) obtained using a latex that contains an elastomer having an amide group-containing monomer-derived structural unit will be supplementarily described.

In a molded article such as a glove that is produced from a copolymerized polymer containing an amide group-containing monomer-derived structural unit, depending on an embodiment, the rubber physical properties markedly vary with time immediately after the production and, despite being formed of an NBR polymer, the molded article exhibits well-balanced and enhanced tensile strength, elongation, and flexibility, particularly an improved tensile strength.

Further, an elastomer having an amide group-containing monomer-derived structural unit greatly improves the tear strength of the molded article. As the amount of introduced amide group-containing monomer is increased, the tear strength tends to be further improved. When the glove is reduced in thickness, a defect that the molded article is broken often occurs in the mold release step of the glove production. This breakage in the mold release step can be inhibited by using an elastomer having an amide group-containing monomer-derived structural unit.

Moreover, a molded article produced using a dip molding composition that contains an elastomer having an amide group-containing monomer-derived structural unit can maintain excellent physical properties, particularly high tensile strength and high tear strength, even after long-term storage.

The use of an amide group-containing monomer enables to produce a crosslinked film having a high tensile strength. Because of this effect, by using the amide group-containing monomer in combination with, for example, an epoxy crosslinking agent, a cross-linked film having a tensile strength of 17 MPa or higher can be produced, and it is also possible to produce a crosslinked film that has a 500% modulus of 7 MPa or less and an elongation of 650% or more while ensuring the above-described tensile strength.

For example, when methacrylamide is used as the amide group-containing monomer and emulsion-polymerized with monomers such as butadiene and acrylonitrile, since methacrylamide has a lower solubility in water than methacrylic acid, the copolymerizability with a hydrophobic polymer such as butadiene is improved, and methacrylamide is thus likely to be uniformly incorporated into the resulting polymer chains.

Further, methacrylamide-derived domains distributed in the polymer chains are different from methacrylic acid in that they are not ionized even in a high pH range and, therefore, cannot form an ionic bond with polyvalent ions existing in the system. This effect is advantageous for the production of a flexible film. Moreover, methacrylamide molecules have a moderately high dipolar moment and, when they are incorporated into the polymer chains through copolymerization reaction, an effect of uniformly generating highly polar domains throughout the polymer chains can be obtained. When a polymer film having such a structure is deformed due to a tensile stress bidirectionally applied thereto, the polymer film is gradually broken with the occurrence of sliding phenomenon between the polymer chains and, therefore, film physical properties having a high strength and a large elongation are exerted.

<Other Copolymerizable Monomer>

In the present embodiment, other monomer that is copolymerizable with the conjugated diene monomer, the ethylenically unsaturated nitrile monomer, the ethylenically unsaturated carboxylic acid monomer, or the amide group-containing monomer can be used as required. This other copolymerizable monomer may be any monomer that contains a polymerizable unsaturated bond in the molecule, and examples thereof include: ethylenically unsaturated sulfonic acid monomers, such as acrylamidepropanesulfonic acid and styrenesulfonic acid; ethylenically unsaturated carboxylic acid ester monomers, such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, monoethyl itaconate, monobutyl fumarate, monobutyl maleate, dibutyl maleate, dibutyl fumarate, ethyl maleate, mono-2-hydroxypropyl maleate, methoxymethyl (meth)acrylate, ethoxyethyl (meth)acrylate, methoxyethoxyethyl (meth)acrylate, cyanomethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, dimethylaminoethyl (meth)acrylate, 2-sulfoethyl acrylate, and 2-sulfopropyl methacrylate; vinyl aromatic monomers, such as styrene, alkyl styrene, and vinyl naphthalate; fluoroalkyl vinyl ethers, such as fluoroethyl vinyl ether; vinylpyridine; and nonconjugated diene monomers, such as vinyl norbornene, dicyclopentadiene, and 1,4-hexadiene. The content of the other copolymerizable monomer is usually 0% by weight or more, 5% by weight or less, preferably 0% by weight or more, 3% by weight or less, with respect to all monomers.

<Latex Production Method>

A latex production method will now be described taking, as an example, a mode of mainly using an acrylonitrile-butadiene rubber containing a carboxyl group and an amide group (XYNBR) as an elastomer.

The method of producing a synthetic latex composition according to the present embodiment can be carried out based on an ordinary polymerization method, and a polymerization reactor may take any of a batchwise mode, a semi-batchwise mode, and a continuous mode. Examples of a method of adding monomers include: a method of adding the monomers to the polymerization reactor all at once; a method of continuously or intermittently adding the monomers in accordance with the progress of polymerization reaction; and a method of adding a portion of the monomers and allowing the added monomers to react until a specific conversion rate is obtained, followed by continuous or intermittent addition of the remaining monomers, and any of these addition methods may be employed. Further, the monomers to be added may be mixed in advance before use, or the monomers may be used separately. When the monomers are mixed, the mixing ratio may be constant or variable.

The MEK-insoluble content is not particularly limited; however, characteristic features of a method for producing a latex composition in which this parameter value is 50% by weight or more and which has flexible basic properties (such a latex composition is hereinafter also referred to as "synthetic latex composition") will now be described.

By this method, in the synthetic latex composition of the present embodiment, a conventional linear XNBR polymerized at a low temperature can be imparted with rubber elasticity such as high stress retention rate and high flexibility.

A synthetic latex composition having an MEK-insoluble content of 50% by weight or more can be produced by, for example, a method in which a polymerization reaction is performed at the below-described relatively high polymerization temperature using a relatively small amount of a chain transfer agent until a specific polymerization conversion rate is obtained, and the polymerization temperature is subsequently further increased.

The polymerization temperature at which the polymerization reaction is performed is set relatively high at, for example, 20°C or higher, 60°C or lower, preferably 25°C or higher, 50°C or lower, such that the resulting polymer in the synthetic latex composition has a low molecular weight, a large amount of branched chains, and an increased MEK-insoluble content.

By using a polymerization initiator in a large amount, the resulting polymer in the synthetic latex composition is allowed to have a low molecular weight, a large amount of branched chains, and an increased MEK-insoluble content.

By setting the amount of the chain transfer agent to be as small as possible at, for example, 0.2% by weight or more, 0.8% by weight or less, the amount of branched chains is increased, and the MEK-insoluble content is thus increased.

It is noted here that, although the present embodiment is characterized in that the MEK-insoluble content is 50% by weight to 80% by weight, the MEK-insoluble content is preferably 60% by weight or more, 80% by weight or less, more preferably 65% by weight or more, 75% by weight or less, still more preferably 68% by weight or more, 72% by weight or less.

When the MEK-insoluble content is more than 80% by weight, the film forming properties are deteriorated and a uniform film is unlikely to be formed, making it difficult to perform dip molding.

It should be noted here that, in a specific embodiment of the present invention, since a hot rubber is used for the purpose of basically imparting rubber elasticity, the MEK-insoluble tends to be high as compared to a case of using a linear latex that is a cold rubber; however, the present inventors believe that there is no problem even if the MEK-insoluble content is less than 50% by weight when it is intended to take advantage of elongation and strength that are characteristic to an amide group-containing latex.

Next, in order to produce a molded article having a soft and favorable texture, it is preferred to control an elastomer in the synthetic latex composition to have an MEK-insoluble content of 50% by weight or more and, at the same time, control a dip molding composition to have a low MEK swelling rate.

For example, the MEK swelling rate is preferably 100 times or higher when the MEK-insoluble content of the dip molding composition is 0% by weight or more, 10% by weight or less, and the MEK swelling rate is preferably 30 times or more, 70 times or less when the MEK-insoluble content is 30% by weight; however, in the dip molding composition of the embodiment in which the MEK-insoluble content is 50% by weight or more, the MEK swelling rate is preferably 5 times or higher, or 20 times or higher, but 40 times or lower, or 25 times or lower and, from the standpoint of obtaining a molded article having a particularly soft and favorable texture, the MEK swelling rate is preferably set in a range of 5 times to 10 times. The MEK swelling rate and the MEK-insoluble content can be determined by the method described below in the section of Examples.

Once the polymerization conversion rate of the latex reached a prescribed value, the polymerization reaction is terminated by, for example, cooling the polymerization system or adding a polymerization terminator. The polymerization conversion rate at which the polymerization reaction is terminated is usually 80% or higher, preferably 90% or higher, more preferably 93% or higher.

Additives used in the polymerization reaction will now be described.

<Emulsifier>

An emulsifier is not particularly limited; however, it is preferably one that is usually used in emulsion polymerization, and examples thereof include: nonionic emulsifiers, such as polyoxyethylene alkyl ethers, polyoxyethylene alkylphenol ethers, polyoxyethylene alkyl esters, and polyoxyethylene sorbitan alkyl esters; anionic emulsifiers, such as fatty acids (e.g., myristic acid, palmitic acid, oleic acid, and linolenic acid) and salts thereof, phosphoric acid esters (e.g., isopropyl phosphate and polyoxyethylene alkyl ether phosphates), alkyl diphenyl ether disulfonates, disodium lauryldiphenyl oxysulfonate, alkyl naphthalenesulfonates, sodium salts of naphthalenesulfonic acid-formalin condensates, sodium dialkylsulfosuccinates, alkyl benzene sulfonates, alkylallyl sulfonates, higher alcohol sulfates, and alkyl sulfosuccinates; cationic emulsifiers, such as ammonium chlorides (e.g., trimethyl ammonium chloride and dialkyl ammonium chloride), benzylammonium salts, and quaternary ammonium salts; and double bond-containing copolymerizable emulsifiers, such as sulfoesters of $\alpha,\beta$-unsaturated carboxylic acids, sulfate esters of $\alpha,\beta$-unsaturated carboxylic acids, and sulfoalkyl aryl ethers. The amount of an emulsifier to be used is not particularly limited; however, it is usually 0.1 parts by weight or more, 10 parts by weight or less, preferably 0.5 parts by weight or more, 6.0 parts by weight or less, with respect to 100 parts by weight of a monomer mixture. Any of the above-described emulsifiers may be used singly, or two or more thereof may be used in combination. Further, in the production of the synthetic latex, an emulsifier may be used all at once, or may be used in portions.

<Chain Transfer Agent>

Examples of the chain transfer agent include: mercaptans, such as *t*-dodecylmercaptan, *n*-dodecylmercaptan, and mercaptoethanol; halogenated hydrocarbons, such as carbon tetrachloride, methylene chloride, and methylene bromide; and $\alpha$-methylstyrene dimer, among which mercaptans such as *t*-dodecylmercaptan and *n*-dodecylmercaptan are preferred. The chain transfer agent may be used all at once at the start of the polymerization reaction, or may be used as needed in accordance with the progress of the polymerization reaction. The chain transfer agent may also be used both at the start of the polymerization reaction and during the progress of the polymerization reaction. In the present embodiment, an elastomer having a large number of branches in its rubber molecular chain and a high MEK-insoluble content is obtained by reducing the amount of the chain transfer agent as much as possible.

<Aqueous Solvent>

Usually, water is used as an aqueous solvent, and the amount thereof is usually 70 parts by weight to 250 parts by weight, preferably 80 parts by weight or more, 170 parts by weight or less, with respect to 100 parts by weight of the monomer mixture. When the amount of the aqueous solvent is less than 70 parts by weight, the stability in the polymerization step may be reduced. Meanwhile, when the amount of the aqueous solvent is greater than 250 parts by weight, a longer time and a greater amount of energy are required for a post-process treatment of the resulting latex, causing a problem that the latex production process is no longer efficient.

<Polymerization Initiator>

A polymerization initiator is not particularly limited, and examples thereof include potassium persulfate, ammonium persulfate, sodium persulfate, superphosphates, hydrogen peroxide, *t*-butyl hydroperoxide, 1,1,3,3-tetramethylbutyl hydroperoxide, *p*-menthane hydroperoxide, 2,5-dimethylhexan-2,5-dihydroperoxide, diisopropylbenzene hydroperoxide, cumene hydroperoxide, di-t-butyl peroxide, di-$\alpha$-cumyl peroxide, acetyl peroxide, isobutyryl peroxide, benzoyl peroxide, and azobis-isobutyronitrile. Any of these polymerization initiators may be used singly, or two or more thereof may be used in combination. The amount of a polymerization initiator to be used is usually 0.001 parts by weight or more, 10 parts by weight or less, preferably 0.01 parts by weight or more, 5 parts by weight or less, more preferably 0.01 parts by weight or more, 2 parts by weight or less, with respect to 100 parts by weight of the monomer mixture.

Further, a peroxide initiator can be used as a redox-type polymerization initiator in combination with a reducing agent. The reducing agent is not particularly limited, and examples thereof include: compounds containing a metal ion in a reduced state, such as ferrous sulfate and cuprous naphthenate; sulfonates, such as sodium methanesulfonate; formaldehyde sulfoxylates, such as sodium formaldehyde sulfoxylate; 2-hydroxy-2-sulfonatoacetates, such as disodium 2-hydroxy-2-sulfonatoacetate; 2-hydroxy-2-sulfinatoacetates, such as disodium 2-hydroxy-2-sulfinatoacetate; amines, such as formdimethyl aniline; and ascorbic acid. Any of these reducing agents may be used singly, or two or more thereof may be used in combination. The amount of a reducing agent to be used is not particularly limited; however, it is, in terms of weight ratio with respect to a peroxide (peroxide/reducing agent), usually 0.01 or higher, 100 or lower, preferably 0.1 or higher, 50 or lower.

<Polymerization Terminator>

A polymerization terminator is not particularly limited, and examples thereof include: nitrites, such as sodium nitride, potassium nitrite, and ammonium nitrite; ascorbic acid; citric acid; hydroxylamine; hydroxylamine sulfate; diethylhydroxylamine; hydroxylamine sulfonic acid and alkali metal salts thereof; 2,2,6,6-tetramethylpiperidinooxyl compounds, such as 4-benzoyloxy-2,2,6,6-tetramethylpiperidinooxyl; sodium dimethyldithiocarbamate; dimethyldithiocarbamates; hydroquinone derivatives; catechol derivatives; resorcinol derivatives; and aromatic hydroxydithiocarboxylic acids, such as hydroxydimethylbenzene dithiocarboxylic acid, hydroxydiethylbenzene dithiocarboxylic acid and hydroxydibutylbenzene dithiocarboxylic acid, and alkali metal salts thereof. A polymerization terminator may be added after or simultaneously with addition of an aqueous inorganic base solution, such as an aqueous sodium hydroxide solution, an aqueous potassium hydroxide solution, or aqueous ammonia. The amount of the polymerization terminator to be used is usually 0.01 parts by weight or more, 5 parts by weight or less, preferably 0.03 parts by weight or more, 2 parts by weight or less, with respect to 100 parts by weight of the monomer mixture. After the termination of the polymerization reaction, as required, unreacted monomers are removed, the solid concentration and the pH are adjusted, and a surfactant, an anti-aging agent, a preservative, an antibacterial agent, or the like is added, whereby a desired latex is produced. It is noted here that, in the method of producing a latex according to the present embodiment, a polymerization auxiliary material such as a deoxidant, a dispersant, a surfactant, a chelating agent, a molecular weight modifier, a particle size modifier, an anti-aging agent, or a preservative can be added as required. The polymerization auxiliary component may

be an organic compound or an inorganic compound.

<Measurement of Crosslinked Structures of Nitrile Rubber Elastomer Containing Carboxyl Group and Amide Group>

There are various methods for measuring the degree of crosslinked structures of the nitrile rubber elastomer containing a carboxyl group and an amide group in a latex; however, as a measurement method that is easy and has good reproducibility, a method of measuring the amount of components insoluble in a parent solvent of a polymer may be employed. When the polymer is an XYNBR, the degree of crosslinked structures can be determined by measuring the amount of components insoluble in methyl ethyl ketone (MEK). Usually, the MEK-insoluble content is affected by, for example, an increase in the amount of crosslinked structures between primary polymer chains that are generated by emulsion polymerization, and the amount of side-chain polymers growing from the primary polymer chains.
A detailed method of measuring the MEK-insoluble content will be described below in the section of Examples.

(2) Epoxy Crosslinking Agent

In one embodiment of the present invention, the dip molding composition contains an epoxy crosslinking agent. The epoxy crosslinking agent is characterized by being capable of increasing the intraparticle crosslink density through intraparticle crosslinking or the like to improve the stress retention rate, maintaining flexibility as compared to a metal crosslinking agent even when crosslinked, and imparting the dip molding composition with high fatigue durability. Much of the epoxy crosslinking agent infiltrates into latex particles, while a portion of the epoxy crosslinking agent forms crosslinks with carboxyl groups at the particle interfaces. The dip molding composition is usually composed of water and latex particles, and the latex particles are each constituted by a hydrophilic region and a lipophilic region (hydrophobic region).
The inside of each of these latex particles is similar to methyl isobutyl ketone (MIBK); therefore, the present inventors tried to measure the MIBK/water distribution ratio of the epoxy crosslinking agent. This measurement was performed to evaluate the ratio of whether the epoxy crosslinking agent that dissolves in water or MIBK in a mixture thereof, and it was believed that the higher the ratio of the epoxy crosslinking agent dissolving in MIBK, the larger is the amount of the epoxy crosslinking agent infiltrate into the latex particles and thus the greater is the contribution of the epoxy crosslinking agent to intraparticle crosslinking.
As a result of the measurement, the present inventors discovered that, when the epoxy crosslinking agent has an MIBK/water distribution ratio of 50% or higher, the tensile strength of a molded article is greatly increased by crosslinking the epoxy crosslinking agent with the above-described latex.
The epoxy crosslinking agent is increasingly hydrolyzed and deactivated in the dip molding composition as the pH increases; therefore, the epoxy crosslinking agent is required to be tri- or higher-valent and hardly soluble in water.
Further, the above-described epoxy compound can also form crosslinks between some of the particles through covalent bonding and complement interparticle crosslinks at the same time. By this, a molded article having excellent fatigue durability can be obtained. Moreover, in covalently-bound crosslinked structures formed by the epoxy crosslinking agent, bonds are different from an ionic bond formed by a metal crosslinking agent such as zinc in that they are unlikely to be broken; therefore, such crosslinked structures are advantageous in that they do not impair the flexibility inherent to the above-described latex.
The features of the epoxy crosslinking agent will now be described one by one.

a. Epoxy Crosslinking Agent Containing Epoxy Compound That Contains Three or More Glycidyl Ether Groups in One Molecule and Has Basic Skeleton Containing Alicyclic, Aliphatic, or Aromatic Hydrocarbon

<Epoxy Compound That Contains Three or More Glycidyl Ether Groups in One Molecule and Has Basic Skeleton Containing Alicyclic, Aliphatic, or Aromatic Hydrocarbon>

The epoxy crosslinking agent contains an epoxy compound, and this epoxy compound is a compound which usually has three or more glycidyl ether groups in one molecule and a basic skeleton containing an alicyclic, aliphatic, or aromatic hydrocarbon (this compound is hereinafter also referred to as "tri- or higher-valent epoxy compound"). An epoxy compound having three or more glycidyl ether groups can be usually produced by allowing epichlorohydrin and an alcohol having three or more hydroxy groups in one molecule to react with each other.
Examples of the alcohol having three or more hydroxy groups that constitutes the basic skeleton of the tri- or higher-valent epoxy compound include aliphatic glycerol, diglycerol, triglycerol, polyglycerol, sorbitol, sorbitan, xylitol, erythritol, trimethylolpropane, trimethylolethane, pentaerythritol, aromatic cresol novolac, and trishydroxyphenylmethane.
Among tri- or higher-valent epoxy compounds, it is preferred to use a polyglycidyl ether.

Specifically, it is preferred to use an epoxy crosslinking agent that contains at least one selected from glycerol triglycidyl ether, trimethylolpropane triglycidyl ether, sorbitol triglycidyl ether, sorbitol tetraglycidyl ether, pentaerythritol triglycidyl ether, and pentaerythritol tetraglycidyl ether, and it is more preferred to use an epoxy crosslinking agent that contains at least one selected from trimethylolpropane triglycidyl ether, pentaerythritol triglycidyl ether, and pentaerythritol tetraglycidyl ether.

<Regarding Epoxy Crosslinking Agent Containing Tri- or Higher-Valent Epoxy Compound>

Among epoxy crosslinking agents, those containing an epoxy compound having a glycidyl ether group can be generally produced by allowing a hydroxy group of an alcohol to react with an epihalohydrin as follows. It is noted here that, in the following (I), for the sake of simplicity of the description, a monohydric alcohol is used as the alcohol.

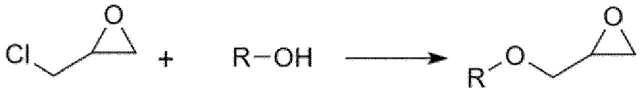

(I)

The epoxy compound contained in the epoxy crosslinking agent may be divalent to about heptavalent depending on the number of hydroxy groups of the alcohol used as a raw material. However, for example, even in the synthesis of a trivalent epoxy compound as a target compound, several kinds of compounds are generated due to side reactions in the reaction process, and a divalent epoxy compound is usually included therein.

Therefore, for example, a trivalent epoxy crosslinking agent is generally obtained as a mixture of divalent and trivalent epoxy compounds. Even in those crosslinking agents that are usually referred to as "trivalent epoxy crosslinking agents", the content ratio of a trivalent epoxy compound, which is a main component, is said to be about 50%.

In addition, some epoxy crosslinking agents are hardly soluble in water, and this is largely attributed to the effects of chlorine and the like that are contained in the structures of epoxy compounds.

The epoxy crosslinking agent is preferably one which contains a tri- or higher-valent epoxy compound obtained by a reaction between an epihalohydrin and an alcohol having three or more hydroxy groups.

As the epihalohydrin, at least one selected from epichlorohydrin, epibromohydrin, and epiiodohydrin may be used. Thereamong, it is preferred to use epichlorohydrin. Further, a tri- or higher-valent epoxy crosslinking agent and a divalent epoxy crosslinking agent can be used in combination as a mixture. Alternatively, in the production of a tri- or higher-valent epoxy crosslinking agent, an alcohol having three or more hydroxy groups and an alcohol having two hydroxy groups can be mixed and allowed to react with each other.

<Crosslinking Reaction Between Epoxy Compound and Carboxyl Group of XYNBR>

A crosslinking reaction between an epoxy compound and a carboxyl group of an XYNBR takes place as illustrated in the following Formula (II). It is noted here that, from the standpoint of simplicity of the description, a monovalent epoxy compound is used in the following (II).

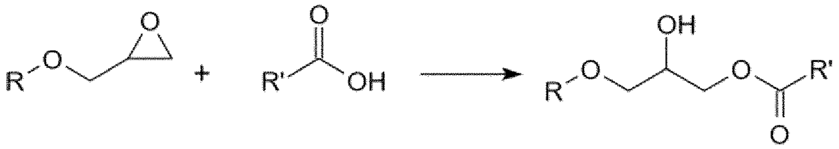

(II)

The epoxy compound forms a crosslink with a carboxyl group contained in the XYNBR and, as an optimum condition for the formation of the crosslink with the epoxy compound, for example, the epoxy compound is heated in the below-described curing step at 120°C or higher to cause a ring-opening reaction of its epoxy group.

<Epoxy Crosslinking Agent Having MIBK/Water Distribution Ratio of 50% or Higher>

In order to increase the tensile strength, the epoxy crosslinking agent preferably has an MIBK/water distribution ratio of 50% or higher. The MIBK/water distribution ratio is more preferably 70% or higher.

The dip molding composition is divided into a hydrophobic region of latex particles and a hydrophilic region of a solvent and, among epoxy crosslinking agents, it is preferred to use one which is hardly soluble in water and readily infiltrates into the latex particles constituting the hydrophobic region of the elastomer.

Further, it is believed that much of the epoxy crosslinking agent exists inside the latex particles in the dip molding composition and thus reacts with carboxyl groups contained in the latex particles to crosslink the elastomer, as a result

of which the crosslink density and the tensile strength of the resulting molded article can be increased.

The MIBK/water distribution ratio can be determined as follows.

First, about 5.0 g of water, about 5.0 g of MIBK, and about 0.5 g of the epoxy crosslinking agent are precisely weighed and added to a test tube. The weight of MIBK and that of the epoxy crosslinking agent are defined as M (g) and E (g), respectively.

This mixture is thoroughly mixed with stirring for 3 minutes at a temperature of 23°C ± 2°C and subsequently separated into an aqueous layer and an MIBK layer by 10-minute centrifugation at $1.0 \times 10^3$ G. Thereafter, the weight of the MIBK layer is measured and defined as ML (g).

$$\text{MIBK/water distribution ratio (\%)} = (\text{ML (g)} - \text{M (g)})/\text{E (g)} \times 100$$

The above-described measurement is performed three times, and an average value thereof is defined as the MIBK/water distribution ratio.

b. Preferred Properties of Epoxy Crosslinking Agent

<Average Number of Epoxy Groups>

As described above, even a tri- or higher-valent epoxy crosslinking agent contains a divalent epoxy compound via a side reaction; therefore, in the evaluation of products, it is important to know the average number of epoxy groups and thereby understand the ratio of a trivalent epoxy group-containing compound.

The average number of epoxy groups can be determined by: identifying epoxy compounds contained in the epoxy crosslinking agent by gel permeation chromatography (GPC); calculating the number of epoxy groups for each of the epoxy compounds by multiplying the number of epoxy groups in one molecule of each epoxy compound by the number of moles of the epoxy compound; and dividing a total value of the numbers of epoxy groups by a total number of moles of all epoxy compounds contained in the epoxy crosslinking agent.

The epoxy crosslinking agent used in the present embodiment preferably has an average number of epoxy groups of greater than 2.0 and, from the standpoint of obtaining a molded article having favorable physical properties, the average number of epoxy groups is more preferably 2.3 or greater, still more preferably 2.5 or greater. Meanwhile, an upper limit of the average number of epoxy groups may be, for example, 7 or less.

<Epoxy Equivalent>

From the standpoint of obtaining a molded article having a favorable tensile strength, the epoxy equivalent of the epoxy compound is preferably 100 g/eq or more, 230 g/eq or less.

The epoxy equivalent of the epoxy compound, which is a value obtained by dividing the average molecular weight of the epoxy compound by the average number of epoxy groups, indicates an average weight per epoxy group. This value can be measured by a perchloric acid method.

<Molecular Weight>

From the standpoint of the dispersibility in water, the epoxy compound contained in the epoxy crosslinking agent has a molecular weight of preferably 150 or more, 1,500 or less, more preferably 175 or more, 1,400 or less, still more preferably 200 or more, 1,300 or less.

c. Amount of Epoxy Crosslinking Agent to be Added

The amount of the epoxy crosslinking agent to be added is usually in a range of 0.3 parts by weight or more, 2.5 parts by weight or less, preferably 0.5 parts by weight or more, 1.5 parts by weight or less, with respect to 100 parts by weight of the elastomer. When the amount of the epoxy crosslinking agent is excessively small, the tensile strength is reduced; however, when the epoxy crosslinking agent is added in an amount of greater than 2.5 parts by weight, for example, 3 parts by weight, the tensile strength and the elongation rate may be reduced. It is noted here that this amount of the epoxy crosslinking agent to be added can also be applied as the amount of the epoxy compound to be added with respect to 100 parts by weight of the elastomer.

(3) Dispersant of Epoxy Crosslinking Agent

The epoxy compound is required to be maintained in a uniformly dispersed state in the dip molding composition. Meanwhile, an epoxy crosslinking agent having an MIBK/water distribution ratio of 50% or higher has a problem in that the higher the MIBK/water distribution ratio, the harder it is to add the crosslinking agent to a latex and the less likely is the crosslinking agent to be dispersed in the latex.

A highly hydrophilic epoxy compound has no problem in terms of dispersibility in water; however, for an epoxy compound used in a solvent-based paint, it was considered dissolving the epoxy crosslinking agent using a dispersant before incorporating it into an elastomer.

Particularly, turbidity tends to be observed when an epoxy crosslinking agent having an MIBK/water distribution ratio of 50% or higher is dissolved in water; therefore, it was considered necessary to disperse such an epoxy crosslinking agent using a dispersant. Specifically, such dispersion with a dispersant is required in the actual mass-production.

The dispersant of the above-described epoxy crosslinking agent (compound) is preferably at least one selected from the group consisting of monohydric lower alcohols, glycols represented by the following Formula (E1), ethers represented by the following Formula (E2), and esters represented by the following Formula (E3):

$$HO\text{-}(CH_2CHR^{1'}\text{-}O)_{n1}\text{-}H \qquad (E1)$$

(wherein, $R^{1'}$ represents a hydrogen atom or a methyl group; and n1 represents an integer of 1 to 3)

$$R^{2'}O\text{-}(CH_2CHR^{1'}\text{-}O)_{n2}\text{-}R^{3'} \qquad (E2)$$

(wherein, $R^{1'}$ represents a hydrogen atom or a methyl group; $R^{2'}$ represents an aliphatic hydrocarbon group having 1 to 5 carbon atoms; $R^{3'}$ represents a hydrogen atom or an aliphatic hydrocarbon group having 1 to 3 carbon atoms; and n2 represents an integer of 0 to 3)

$$R^{2'}O\text{-}(CH_2CHR^{1'}\text{-}O)_{n3}\text{-}(C{=}O)\text{-}CH_3 \qquad (E3)$$

(wherein, $R^{1'}$ represents a hydrogen atom or a methyl group; $R^{2'}$ represents an aliphatic hydrocarbon group having 1 to 5 carbon atoms; and n3 represents an integer of 0 to 3).

Examples of the monohydric lower alcohols include methanol and ethanol.

Examples of the glycols represented by Formula (E1) include ethylene glycol, propylene glycol, diethylene glycol, dipropylene glycol, and tripropylene glycol.

Among the ethers represented by Formula (E2), examples of glycol ethers include diethylene glycol monomethyl ether, diethylene glycol monoisopropyl ether, diethylene glycol monobutyl ether, diethylene glycol monoisobutyl ether, triethylene glycol monomethyl ether, triethylene glycol monobutyl ether, tripropylene glycol monomethyl ether, and triethylene glycol dimethyl ether. As an ether represented by Formula (E2), an ether wherein n2 is 0 can be used as well.

Examples of the esters represented by Formula (E3) include diethylene glycol monoethyl ether acetate and diethylene glycol monobutyl ether acetate.

When the above-described dispersants of the epoxy compound are used, any one of them may be used singly, or two or more thereof may be used in combination. The dispersant(s) is/are preferably used without being mixed with water in advance.

Among the above-described dispersants, alcohols are preferred and, particularly, it is preferred to use methanol, ethanol, or diethylene glycol. From the standpoint of volatility and flammability, it is particularly preferred to use diethylene glycol.

Diethylene glycol is presumed to be preferred since it has highly hydrophilic glycol groups and an ether structure and contains a hydrophobic hydrocarbon structure at the same time, and is thus readily soluble in both water and the elastomer.

In the dip molding composition, the weight ratio of the epoxy crosslinking agent containing the epoxy compound and the dispersant is preferably 1:4 to 1:1.

When an epoxy compound having a high MIBK/water distribution ratio is used for the preparation of the dip molding composition, it is preferred to dissolve the epoxy compound in its dispersant in advance and then mix the resulting dispersion with other constituents of the dip molding composition.

(4) Metal Crosslinking Agent

In the present embodiment, a metal crosslinking agent may be further incorporated as a crosslinking agent. From the standpoint of improving the film forming properties, a metal crosslinking agent can be added in addition to the

above-described epoxy crosslinking agent, and examples of the metal crosslinking agent include divalent or higher-valent amphoteric metal compounds. Further, as the metal crosslinking agent, it is effective to add a small amount of, for example, a zinc compound. A zinc compound forms interparticle crosslinks through ionic crosslinking and is expected to not only improve the tensile strength of a molded article and inhibit swelling of the molded article in an artificial sweat solution and a reduction in the tensile strength, but also improve the organic solvent impermeability. An addition of such a zinc compound in a large amount leads to a reduction in the stress retention rate and an increase in the film hardness; however, it is sometimes necessary to increase the amount of the zinc compound to be added when strength is required, for example, in the production of an ultrathin glove (2 g).

Examples of the zinc compound include zinc oxide and zinc hydroxide, and zinc oxide is mainly used. The zinc oxide used in this embodiment of the present invention is not particularly limited and, usually, any commonly used zinc oxide can be used.

When zinc oxide is incorporated into the dip molding composition of the present embodiment, the amount thereof to be added is 0.1 parts by weight or more, 2.0 parts by weight or less, preferably 0.2 parts by weight or more, 1.5 parts by weight or less, more preferably 0.2 parts by weight or more, 1.0 part by weight or less, still more preferably 0.1 parts by weight or more, 0.6 parts by weight or less, with respect to 100 parts by weight of the elastomer contained in the dip molding composition.

(5) pH Modifier

The concept of pH adjustment in conventional XNBR dip molding compositions is usually to increase a latex pH of about 8.3 to a range of 10 or higher, 11 or less or so in order to orient carboxyl groups, which are oriented on the inside at the latex particle interfaces, to the outside in the form of carboxylate ions ($COO^-$). By this, zinc ions or calcium ions of a metal crosslinking agent, or an organic crosslinking agent forming interparticle crosslinks can be crosslinked with carboxyl groups in an elastomer, as a result of which the tensile strength of the resulting molded article can be increased, and interparticle crosslinks can be formed to mitigate the drawback of a synthetic rubber latex. Further, as the latex particles themselves, those which are linear and contain as little crosslinked structure as possible with an MEK-insoluble content of 0% by weight or more, about 30% by weight or less are used in many cases, and these latex particles are produced such that a large number of carboxyl groups exist at the particle interfaces. In this sense, it has been believed that a high pH of, for example, 10.5 is more preferred; however, a pH of 11 or higher makes the resulting film hard, and this value has thus been considered as a limit.

In the present embodiment which is aimed at improving the tensile strength by keeping as many carboxyl groups as possible inside latex particles and thereby enhancing intraparticle crosslinking using an epoxy crosslinking agent infiltrating into the particles, however, a pH of higher than, for example, 10.5 causes carboxyl groups to be oriented on the outside at the particle interfaces, and thus reduces tensile strength. In addition, since the epoxy crosslinking agent partially contributes to interparticle crosslinking as well, the strength is reduced when the pH is lower than 9.0. In this sense, pH adjustment is important in the present embodiment, and the pH is, for example, preferably 9.0 or higher, 10.5 or lower, more preferably 9.3 or higher, 10.5 or lower, still more preferably 9.5 or higher, 10.5 or lower. With regard to the pH adjustment, a higher pH leads to deterioration of the flexibility, but improves the tensile strength.

As the pH modifier, ammonia compounds, amine compounds, and alkali metal hydroxides can be used. Thereamong, it is preferred to use an alkali metal hydroxide since this makes it easier to adjust the production conditions such as pH and gelling conditions and, among alkali metal hydroxides, it is the most convenient to use potassium hydroxide (KOH). In the below-described Examples, KOH was mainly used as the pH modifier.

The amount of the pH modifier to be added is about 0.1 parts by weight or more, 3.0 parts by weight or less with respect to 100 parts by weight of the elastomer contained in the dip molding composition; however, industrially, the pH modifier is usually used in an amount of about 1.8 parts by weight or more, 2.0 parts by weight or less.

(6) Other Components

The dip molding composition usually contains the above-described components and water, and may also contain other optional components.

The dip molding composition may further contain a dispersant. This dispersant is preferably an anionic surfactant, and examples thereof include carboxylates, sulfonates, phosphates, polyphosphates, high-molecular-weight alkyl aryl sulfonates, high-molecular-weight sulfonated naphthalenes, and high-molecular-weight naphthalenes, and formaldehyde condensation polymers, among which a sulfonate is preferably used.

As the dispersant, a commercially available product may be used as well. For example, "TAMOL NN9104" manufactured by BASF Japan Ltd. can be used. The amount thereof to be used is preferably about 0.5 parts by weight or more, 2.0 parts by weight or less with respect to 100 parts by weight of the elastomer contained in the dip molding composition.

The dip molding composition may further contain a variety of other additives. Examples of the additives include an antioxidant, a pigment, and a chelating agent. As the antioxidant, a hindered phenol-type antioxidant, such as WINGSTAY L, can be used. Further, as the pigment, for example, titanium dioxide can be used. As the chelating agent, for example, sodium ethylenediaminetetraacetate can be used.
The dip molding composition of the present embodiment can be prepared by mixing the elastomer and the epoxy crosslinking agent, usually along with the pH modifier, water and, as required, various additives such as a humectant, a dispersant, and an antioxidant, using a commonly used mixing means such as a mixer.

2. Method of Producing Molded Article

Another embodiment of the present invention is a molded article (dip-molded article) that is a cured product of the above-described dip molding composition. This molded article can be used as, for example, a glove for surgical, experimental, industrial, or household use, a medical equipment such as a condom or a catheter, or a product such as a balloon, a nipple, or a fingerstall, and the molded article can be particularly preferably used as a glove. A method of producing a molded article will now be described for a case where the molded article is a glove.
A method of producing a molded article that is a cured product of the dip molding composition is not particularly limited, and the method includes: the step of coagulating the dip molding composition to form a film on a mold or former for dip molding (glove forming mold); and the step of generating crosslinked structures in the elastomer. As a method of coagulating the dip molding composition to form a film, for example, any of a direct immersion method, a coagulation-immersion method, an electric immersion method, and a heat-sensitive immersion method may be employed and, thereamong, a direct immersion method or a coagulation-immersion method is preferred.
A method of producing a glove as a molded article will now be described in detail for a case where a coagulation-immersion method is employed as the method of coagulating the dip molding composition to form a film.
A glove can be produced by, for example, the following production method that includes:

(1) the coagulant adhesion step (the step of allowing a coagulant to adhere to a glove forming mold);
(2) the maturation step (the step of adjusting and stirring a dip molding composition);
(3) the dipping step (the step of immersing the glove forming mold in the dip molding composition);
(4) the gelling step (the step of gelling a film formed on the glove forming mold to prepare a cured film precursor);
(5) the leaching step (the step of removing impurities from the cured film precursor thus formed on the glove forming mold);
(6) the beading step (the step of making a roll in a cuff portion of the glove to be obtained);
(7) the curing step (the step of heating and drying the cured film precursor at a temperature required for crosslinking reaction),

which steps (3) to (7) are performed in the order mentioned.
The above-described production method may optionally include the following step (6') between the steps (6) and (7):
(6') the precuring step (the step of heating and drying the cured film precursor at a temperature lower than the temperature of the curing step).
The above-described production method may optionally further include the following step (7') after the step (7):
(7') the anti-blocking treatment step.
A method of performing an anti-blocking treatment is not particularly limited, and examples thereof include: a chlorination method in which a treatment is performed by immersion in a mixed aqueous solution of sodium hypochlorite and hydrochloric acid, or using a chlorine gas chamber; a polymer coating method in which a polymer having an anti-blocking performance is applied onto a molded article; and a slurry method in which a molded article is immersed in an aqueous solution containing a lubricant component. Any of these methods may be employed, and the anti-blocking treatment step may be performed after removing a dip-molded article from the glove forming mold.
The above-described production method also encompasses a method of producing a glove by so-called double-dipping, in which the steps (3) and (4) are repeated twice.
It is noted here that the term "cured film precursor" used herein refers to a film formed of an elastomer aggregated on a glove forming mold by a coagulant in the dipping step, which film has been gelled to a certain extent due to dispersion of calcium therein in the subsequent gelling step but has not been subjected to final curing.
The above-described steps will now each be described in detail.

(1) Coagulant Adhesion Step

(a) A glove forming mold is immersed in a coagulant solution that contains a $Ca^{2+}$ ions as coagulant and a gelling agent in an amount of 5% by weight or more, 40% by weight or less, preferably 8% by weight or more, 35% by weight or less. In this process, the duration of allowing the coagulant and the like to adhere to the surface of the glove forming mold is set as appropriate, and it is usually 10 seconds or longer, 20 seconds or shorter. Other inorganic salt having an effect of causing an elastomer to precipitate may be used as well. Particularly, it is preferred to use calcium nitrate. This coagulant is usually used in the form of an aqueous solution containing the coagulant in an amount of 5% by weight or more, 40% by weight or less.

Further, it is preferred that such a coagulant solution contain potassium stearate, calcium stearate, a mineral oil, an ester-based oil, or the like as a mold release agent in an amount of 0.5% by weight or more, 2% by mass or less, for example, about 1% by weight.

The coagulant solution is not particularly limited, and it is generally provided as a mixture of, for example, a coagulant component, a solvent, a surfactant, a humectant, an inorganic filler, and/or a mold release agent. Examples of the coagulant component include: metal halides, such as barium chloride, calcium chloride, magnesium chloride, aluminum chloride, and zinc chloride; nitrates, such as barium nitrate, calcium nitrite, and zinc nitrate; acetates, such as barium acetate, calcium acetate, and zinc acetate; sulfates, such as calcium sulfate, magnesium sulfate, and aluminum sulfate; and acids, such as acetic acid, sulfuric acid, hydrochloric acid, and nitric acid. These compounds may be used singly or in combination and, thereamong, calcium nitrate or calcium chloride is more preferred.

The solvent is selected as required from, for example, water, alcohols, and acids.

The surfactant is used for the purposes of allowing the coagulant solution to uniformly adhere to the surface of the glove forming mold and making it easy to remove the resulting film from the glove forming mold, and a nonionic surfactant, a metallic soap, or other compound is used as the surfactant.

As the metallic soap, calcium stearate, ammonium stearate, or zinc stearate is used and, as required, a metal oxide, calcium carbonate, talc, an inorganic filler, or the like may be used.

(b) The glove forming mold to which the coagulant solution has adhered is placed in an oven having an internal temperature of 110°C or higher, 140°C or lower for 1 minute or longer, 3 minutes or shorter so as to dry the coagulant solution and thereby adhere the coagulant to the entirety or a part of the surface of the glove forming mold. In this process, it should be noted that the glove forming mold has a surface temperature of about 60°C after the drying, and this affects the subsequent reactions.

(c) Calcium not only functions as a coagulant for the formation of a film on the surface of the glove forming mold, but also contributes to the function of crosslinking a substantial portion of a glove to be eventually produced. The metal crosslinking agent that may be added later can be said to compensate the drawbacks of calcium in this crosslinking function.

(2) Maturation Step

As described above in the section regarding the pH modifier of the dip molding composition, the maturation step is the step of adjusting the above-described dip molding composition according to one embodiment to have a pH of usually 9.5 or higher, 10.5 or lower, preferably 10.0 or higher, 10.5 or lower, and stirring this dip molding composition. It is believed that, by this step, the components in the dip molding composition are dispersed and homogenized.

(3) Dipping Step

The dipping step is the step of pouring the dip molding composition (dipping liquid), which has been stirred in the above-described maturation step, into a dipping tank and immersing the glove forming mold, to which the coagulant has been adhered and dried in the above-described coagulant adhesion step, in this dipping tank usually for a period of 1 second or longer, 60 seconds or shorter under a temperature condition of 25°C or higher, 35°C or lower.

In this step, the calcium ions contained in the coagulant cause the elastomer contained in the dip molding composition to aggregate on the surface of the glove forming mold, whereby a film is formed.

(4) Gelling Step

The gelling step is performed for the purposes of allowing crosslinking of the elastomer to slightly proceed and thereby inducing gelation to a certain extent such that the film is not deformed during the subsequent leaching and, at the same time, dispersing calcium in the film to attain sufficient calcium crosslinking later. As for the gelling conditions, the gelling step is generally performed for a period of 1 minute or longer, 4 minutes or shorter in a temperature range of usually 30°C or higher, 140°C or lower.

(5) Leaching Step

(a) The leaching step is the step of removing excess chemical agents and impurities that hinder the subsequent curing, such as calcium precipitated on the surface of the cured film precursor, by washing with water. Usually, the glove forming mold is rinsed in heated water at 30°C or higher, 80°C or lower for 1.5 minutes or longer, 4 minutes or shorter.
(b) Leaching is an important step for removing an emulsifier constituting a film of latex particles so as to allow crosslinking to proceed smoothly in the curing step, maintaining the metal crosslinking agent in the film by converting complex ions into water-insoluble hydroxides, and removing excess calcium derived from the coagulant and potassium derived from the pH modifier.

(6) Beading Step

The beading step is the step of, after the completion of the leaching step, rolling up a glove cuff end of the cured film precursor to make a ring of an appropriate thickness and thereby reinforce the cuff end. A rolled portion having good adhesion is obtained by performing the beading step in a wet state after the leaching step.

(6') Precuring Step

(a) The precuring step is the step of, after the beading step, heating and drying the cured film precursor at a temperature lower than the temperature of the subsequent curing step. In this step, the heating and drying are usually performed at a temperature of 60°C or higher, 90°C or lower for 30 seconds or longer, 5 minutes or shorter or so. When the curing step is performed at a high temperature without the precuring step, water may be rapidly evaporated and blister-like bumps may be formed on the resulting glove, causing deterioration of the quality; however, the production process may proceed to the curing step without going through this precuring step.
(b) The temperature may be increased to a final temperature of the curing step without going through the precuring step; however, when curing is performed in plural drying furnaces and the first drying furnace has a slightly lower temperature, the drying performed in this first drying furnace corresponds to the precuring step.

(7) Curing Step

The curing step is the step of heating and drying the cured film precursor at a high temperature to ultimately complete the crosslinking and obtain a cured film as a glove. The heating and drying are usually performed at a temperature of 90°C or higher, 140°C or lower for about 10 minutes or longer 30 minutes or shorter, preferably about 15 minutes or longer, 30 minutes or shorter.

(8) Double-Dipping

With regard to a glove production method, so-called single-dipping has been described in the above. In contrast, the dipping step and the gelling step may be performed twice or more, and this process is usually referred to as "double-dipping".
Double-dipping is performed for the purpose of, for example, inhibiting the generation of pin-holes in the production of a thick glove (having a thickness of greater than 200 μm but about 300 μm or less) as well as in the production of a thin glove.
As a point to be noted for double-dipping, for example, in order to allow XNBR to aggregate in the second dipping step, a sufficient time is required in the first gelling step so as to cause calcium to adequately precipitate on the surface of the resulting film.
When the physical properties of the molded article produced using the dip molding composition are evaluated, the evaluation is conducted after performing at least one day of temperature and humidity conditioning following the removal of the molded article from the glove forming mold.

3. Molded Article

An XYNBR molded article produced by the above-described production method using the above-described dip

molding composition is flexible and exhibits good elongation while having excellent tensile strength as compared to conventional XNBR molded articles. In conventional XNBR molded articles, at the time of polymerization, the amount of crosslinked structures of latex is reduced and a carboxylic acid is used in a large amount to complement interparticle gaps with a metal crosslinking agent such as zinc; therefore, the elasticity inherent to rubber is increasingly diminished. In contrast, in the amide group-containing molded article of the present invention, at least one property of tensile strength, elongation, or flexibility is improved by the interaction between amide groups and polymer chains. Further, although the interaction of amide groups between polymer chains reduces the stress retention rate, the crosslinked structures of XYNBR itself and the intraparticle crosslinks formed by the epoxy crosslinking agent with carboxyl groups contained in the latex particles can complement the stress retention rate and impart the molded article with a certain level of rubber elasticity. Moreover, the amount of carboxylic acid residues in the latex particles is minimized and crosslinking of carboxylic acid residues with calcium and/or zinc is reduced as much as possible while the interparticle crosslinking is complemented by a portion of the epoxy crosslinking agent, whereby a more flexible molded article can be produced. In an XNBR latex, the tensile strength can also be increased by sulfur vulcanization that generates a large amount of intraparticle crosslinks; however, this has a problem of causing type IV allergy. In addition, although interparticle crosslinks formed by zinc crosslinking with carboxylic acid residues at the interface of the latex particles improve the tensile strength, they cause a reduction in the stress retention rate and a loss of flexibility. Depending on an embodiment, the XYNBR molded article of the present invention not only can yield a surgical glove having an elongation, a flexibility, and a strength that satisfy the ASTM Standard through interaction of amide groups between polymer chains, which surgical glove could not be produced using an XNBR molded article, but also can exert a tensile strength of 6 N as an ultrathin glove (2 g), which could not be achieved by a molded article of hot-rubber branched XNBR.

The physical properties of the molded article of the present embodiment will now be described using a glove as an example.

Examples of the physical properties of the above-described glove include tensile strength, elongation rate, stress retention rate, and tear strength.

These physical properties can be measured by the below-described respective test methods.

<Tensile Strength, Modulus, Elongation Rate, and Tear Strength>

The tensile strength, the modulus, and the elongation rate of a dip-molded article are measured in accordance with the method prescribed in ASTM D412. The dip-molded article is punched out using Die-C manufactured by Dumbbell Co., Ltd. to prepare a test piece. The test piece is measured using AllroundLine universal tester Z-100 manufactured by ZwickRoell Corporation at a test rate of 500 mm/min, a chuck distance of 75 mm, and a gauge mark distance of 25 mm.

As glove physical properties, a tensile strength of 14 MPa or higher and an elongation rate of 500% or higher are considered as a reference.

With regard to the modulus, particularly from the standpoint of obtaining satisfactory flexibility that does not hinder the movement of the fingers wearing the glove, focus is given to the modulus at 100% elongation (100% modulus), the modulus at 300% elongation (300% modulus), and the modulus at 500% elongation (500% modulus).

XNBR gloves that are commercially available at present have a modulus of about 3 to 4 MPa at 100% elongation, about 9 to 12 MPa at 300% elongation, and about 20 to 35 MPa at 500% elongation; however, this means that these XNBR gloves are considerably harder than natural rubber that has a modulus of about 1 to 1.5 MPa, about 3 to 5 MPa, and about 8 to 12 MPa, respectively. In view of this, the present inventors take, as a reference, a 100% modulus of 2 MPa or less, a 300% modulus of 4 MPa or less, and a 500% modulus of 15 MPa or less, and believe that, by achieving these modulus values, sufficient effects can be obtained in terms of, for example, the ease of performing fine operations with fingertips.

As an index of the tensile strength, the FAB (Force at Break) may be used as well.

In a tensile test of a film constituting a molded article, the FAB (EN Standard) is preferably not less than 5.5 N, more preferably not less than 6.0 N, and an upper limit value thereof is not particularly limited.

The FAB can be measured in accordance with the method of the EN455-2:2009 Standard using, for example, a testing apparatus STA-1225 (manufactured by A&D Co., Ltd.) at a test rate of 500 mm/min and a chuck distance of 75 mm.

The tear strength of a dip-molded article is measured using a Die-C according to the ASTM Standard D624. The dip-molded article is punched out using ASTM D624 Die-C manufactured by Dumbbell Co., Ltd. to prepare a test piece. The test piece is measured using AllroundLine universal testing machine Z-100 manufactured by ZwickRoell Corporation at a test rate of 500 mm/min.

As a glove physical property, the tear strength is preferably 25 N/mm or higher, more preferably 40 N/mm or higher, still more preferably 50 N/mm or higher.

<Stress Retention Rate>

The stress retention rate is determined as follows.

A test piece is prepared from a cured film in accordance with ASTM D412 using Die-C manufactured by Dumbbell Co., Ltd., and gauge marks are drawn on the test piece at a gauge mark distance of 25 mm.

This test piece is mounted on a tensile tester at a chuck distance of 90 mm, and stretched at a tensile speed of 500 mm/min. The stretching of the test piece is terminated once the gauge mark distance is doubled and, at the same time, the stress M0 at 100% elongation is measured. Change in the stress is measured while maintaining the test piece after the termination of the stretching, and the stress M6 is measured after a lapse of 6 minutes. Then, the stress retention rate is calculated as (M6/M0) × 100 (%). A higher stress retention rate indicates a state where more stress is maintained after the stretching, which represents a larger elastic deformation force causing the test piece to return back to the original shape upon removal of an external force, and makes the glove to have a better fit and more favorable tightening of its cuff portion, so that wrinkling of the glove is further reduced.

The stress retention rate determined by the above-described method is in the order of 30% for conventional sulfur-crosslinked XNBR gloves; therefore, an XNBR glove is favorable when it has a stress retention rate of 40% or higher, and the stress retention rate is more preferably 50% or higher, still more preferably 60% or higher.

## EXAMPLES

### 1. Method of Execution

The present invention will now be described in more detail by way of Examples.

The amount (parts by weight) of each additive is based on the solid content, and the amount (parts by weight) of an epoxy crosslinking agent is based on a total weight of crosslinking agents.

In the below-described Examples, cases where a cured film or a glove was produced as a molded article that is a cured product of a dip molding composition (latex composition) is described.

The latex compositions used in the below-described experiments were prepared by the following polymerization method.

After purging the inside of a stirrer-equipped pressure-resistant autoclave with nitrogen, 1,3-butadiene, acrylonitrile, methacrylic acid, and methacrylamide (total amount of these monomers: 100 parts), as well as 0.5 parts of a chain transfer agent (TDM: t-dodecylmercaptan), 150 parts of water, 2.5 parts of an anionic emulsifier (SDBS: sodium dodecylbenzenesulfonate), an oxygen scavenger (sodium dithionite), 0.1 parts of a chelating agent EDTA (CHELEST 400G, manufactured by Chelest Corporation), and a particle size modifier (potassium pyrophosphate) were added to the autoclave along with 0.005 parts of *p*-menthane hydroperoxide (PMHP) (PERMENTAH, manufactured by NOF Corporation) and 0.02 parts of sodium formaldehyde sulfoxylate (SFS) as redox-type polymerization initiators, and 0.005 parts of ferrous sulfate. These materials were allowed to react for 20 hours with stirring while the polymerization temperature was maintained at 25°C. After the polymerization conversion rate was confirmed to be 97%, the polymerization reaction was terminated with an addition of a pH modifier and a polymerization terminator. Unreacted monomers were removed from the thus obtained latex under reduced pressure, and the pH and the concentration of this copolymer latex was subsequently adjusted with an aqueous ammonia solution to attain a solid concentration of 45% and a pH of 8.3, after which an aqueous dispersion of a butylated reaction product of *p*-cresol and dicyclopentadiene (e.g., BOSTEX 362, manufactured by Akron Dispersion Inc.) in an amount of 0.5 parts by weight in terms of solid content was added as an anti-aging agent to 100 parts by weight of the latex, whereby a latex composition was obtained. The amount (parts) of each monomer is shown in Tables below for each Experimental Example. The properties of the thus obtained latex composition are also shown in Tables below for each Experimental Example.

The properties of the elastomers used in the present Experimental Examples were determined as follows.

[MEK Swelling Rate and MEK-Insoluble Content]

The MEK swelling rate and the MEK-insoluble content were determined as follows. About 0.2 g of a dry sample of each latex composition was precisely weighed to determine the pre-immersion weight of the latex composition dry sample (W1). This dry sample was placed in a 80-mesh metal basket and, in this state, the whole basket was immersed into 80 mL of MEK in a 100-mL beaker. The beaker was then sealed with a parafilm and left to stand for 24 hours at room temperature. Subsequently, the mesh basket was taken out of the beaker, the weight thereof was measured, and the weight of swollen latex composition (W2) was determined by subtracting the weight of the basket. Thereafter, the mesh basket was hung in a draft and dried for 1 hour. After this mesh basket was vacuum-dried at 105°C for 1 hour, the weight thereof was measured, and the post-immersion weight of the latex composition dry sample (W3) was determined by subtracting the weight of the basket.

The MEK swelling rate was calculated using the following equation:

$$\text{MEK swelling rate (unit: parts)} = (\text{W2 (g)}/\text{W3 (g)})$$

Further, the MEK-insoluble content was calculated using the following equation:

$$\text{MEK-insoluble content (unit: \% by weight)} = (\text{W3 (g)}/\text{W1 (g)}) \times 100$$

The latex composition dry sample was prepared as follows. That is, in a 500-mL bottle, a latex composition of interest was stirred for 30 minutes at a rotation speed of 500 rpm, and 14 g of the latex composition was subsequently weighed on a 180 mm × 115 mm stainless-steel vat and dried for 5 days at a temperature of 23°C ± 2°C and a humidity of 50 ± 10 RH% to prepare a cast film, after which this cast film was cut into a 5-mm square piece to obtain a synthetic latex composition dry sample.

[Molded Articles]

The molded articles of the below-described Experimental Examples were produced by the following method.
An immersion glove forming mold made of ceramic, which had been washed and heated, was immersed in a coagulant composed of a mixed aqueous solution in which the concentrations of calcium nitrite and calcium stearate were adjusted such that a prescribed film thickness would be obtained for each Experimental Example, and subsequently dried for 3 minutes under a condition where the glove forming mold had a surface temperature of 70°C, thereby adhering the coagulant to the mold.
Subsequently, to each of the above-obtained latex compositions, an epoxy crosslinking agent and zinc oxide were added as crosslinking agents in the amounts prescribed for each Experimental Example. These crosslinking agents were added in the respective amounts shown in Tables below for each Experimental Example.
Next, after immersing the glove forming mold in the thus obtained dip molding composition for 30 seconds or longer, 60 seconds or shorter, the glove forming mold was taken out and heated at 80°C for 1 minute to induce gelation of the resulting film on the glove forming mold. This film-laminated glove forming mold was immersed in heated water of 60°C or higher, 70°C or lower for 3 minutes to perform a leaching treatment, after which the glove forming mold was left to stand in a test oven, heated at 70°C for 5 minutes, and then further heat-treated at the prescribed curing temperature for the prescribed time as shown in Tables below for each Experimental Example, without being taken out of the oven.
The glove forming mold was cooled until its surface temperature dropped to 40°C, and subsequently immersed for 40 seconds in a chlorination immersion bath adjusted to have an active chlorine concentration of 900 ppm or more, 1,000 ppm or less with sodium hypochlorite and hydrochloric acid. This glove forming mold was washed with water, then with a 0.4% aqueous sodium sulfate solution, and again with water, followed by drying at 100°C for 5 minutes. The glove forming mold was sufficiently cooled at room temperature, and the film was subsequently removed from the glove forming mold. The thus prepared film was subjected to 24-hour humidity conditioning at a temperature 25°C and a humidity of 55%RH, and the below-described properties were evaluated. The evaluation results are shown in Tables below for each Experimental Example.

[Crosslinking Agent]

(Epoxy Crosslinking Agent)

In the present Examples, "DENACOL EX-321" (trade name) manufactured by Nagase ChemteX Corporation was used as an epoxy crosslinking agent, and the physical properties thereof are as follows.

Epoxy equivalent: 140 g/eq.
Average number of epoxy groups: 2.7
MIBK/water distribution ratio: 87%
Amount of active ingredient: 27%

The epoxy equivalent is a catalog value, and the average number of epoxy groups is an analysis value.
The MIBK/water distribution ratio was determined by the method described above in the section of MODE FOR CARRYING OUT THE INVENTION.
In those Examples where the epoxy crosslinking agent was used, the epoxy crosslinking agent was added

after being mixed with the same amount of diethylene glycol.

(Metal Crosslinking Agent)

In the present Examples, zinc oxide was used as a metal crosslinking agent. This zinc oxide used in Examples was "CZnO-50" (trade name) manufactured by Farben Technique (M) Sdn Bhd.

[Evaluation of Molded Articles]

The molded articles used in the present Examples were evaluated as follows.

(Stress Retention Rate)

The stress retention rate was determined in accordance with the method described above in the section of MODE FOR CARRYING OUT THE INVENTION.

(Tensile Strength, Modulus, Elongation Rate, FAB, and Tear Strength)

The tensile strength, the modulus, the elongation rate, the FAB, and the tear strength were determined in accordance with the respective methods described above in the section of MODE FOR CARRYING OUT THE INVENTION.

<Experiments A>

Experiments A were aimed at verifying the differences in physical properties between a molded article obtained by crosslinking of amide group-containing XNBR (XYNBR) and a molded article obtained by crosslinking of XNBR. It is noted here that an elastomer with an addition of methacrylamide and the elastomer without an addition of methacrylamide had the same MEK-insoluble content, MEK swelling rate, and Mooney viscosity at 56.1% by weight, 37 times, and ML108, respectively.

The results of Experiments A are shown below.

[Table 1]

| | | | Experiment A1 | Experiment A2 | Experiment A3 | Experiment A4 | Experiment A5 | Experiment A6 | Experiment A7 | Experiment A8 |
|---|---|---|---|---|---|---|---|---|---|---|
| Elastomer | Monomer formulation (parts by weight) | Butadiene | 72.0 | 74.0 | 72.0 | 74.0 | 72.0 | 74.0 | 72.0 | 72.0 |
| | | Acrylonitrile | 22.0 | 22.0 | 22.0 | 22.0 | 22.0 | 22.0 | 22.0 | 22.0 |
| | | Methacrylic acid | 4.0 | 4.0 | 4.0 | 4.0 | 4.0 | 4.0 | 4.0 | 4.0 |
| | | Methacrylamide | 2.0 | - | 2.0 | - | 2.0 | - | 2.0 | 2.0 |
| Crosslinking agent | Epoxy (EX-321) (parts by weight) | | 1.0 | 1.0 | 0.5 | 0.5 | 0.7 | 0.7 | 0.5 | 0.5 |
| | Zinc oxide (parts by weight) | | 0.5 | 0.5 | 1.0 | 1.0 | 0.7 | 0.7 | 1.0 | 1.0 |
| Production conditions | Curing temperature (° C) | | 130 | 130 | 120 | 130 | 120 | 130 | 100 | 120 |
| | Curing time (min) | | 20 | 20 | 20 | 20 | 20 | 20 | 30 | 30 |
| Physical properties of molded article | Thickness (mm) | | 0.073 | 0.074 | 0.058 | 0.060 | 0.060 | 0.062 | 0.067 | 0.057 |
| | Elongation rate (%) | | 611 | 592 | 645 | 614 | 677 | 642 | 637 | 641 |
| | Tensile strength (MPa) | | 20 | 12.9 | 32.32 | 22.65 | 23.23 | 19.72 | 30.3 | 29.8 |
| | FAB (N) | | 5.8 | 4.9 | 6.65 | 5.69 | 5.28 | 4.3 | 6.81 | 6.6 |

From Table 1, it is seen that, in the molded articles produced using a dip molding composition containing an elastomer having a structural unit derived from a methacrylamide group-containing monomer, as compared to those molded articles produced using a dip molding composition containing an elastomer not having such a structural unit, the elongation rate was increased while the tensile strength and the FAB, which were thought to be conflicting with the elongation rate, were increased as well.

Further, with regard to the incorporation of the crosslinking agents, it is seen that a greater amount of epoxy resulted in superior 500% modulus and elongation but a lower strength, whereas a greater amount of zinc oxide resulted in a higher tensile strength and had a tendency of increasing the hardness. It is also seen that the use of a greater amount of the epoxy crosslinking agent resulted in a higher stress retention rate.

<Experiments B>

Experiments B were aimed at examining the effects of various conditions, particularly the MEK-insoluble content, in more detail while comparing molded articles using XYNBR with molded articles using XNBR. In addition, it was examined if the same effects were obtained with acrylonitrile. In Experiments B, the physical properties of molded articles obtained from XYNBR were examined by also modifying the amounts of acrylonitrile, methacrylic acid, methacrylamide, epoxy crosslinking agent, and zinc oxide, as well as the curing temperature and the curing time.

The results of Experiments B are shown below.

[Table 2-1]

| | | | Experiment B1 | Experiment B2 | Experiment B3 | Experiment B4 | Experiment B5 | Experiment B6 | Experiment B7 |
|---|---|---|---|---|---|---|---|---|---|
| Elastomer | Formulation (parts by weight) | Butadiene | 72.0 | 72.0 | 71.5 | 73.0 | 67.0 | 67.0 | 65.0 |
| | | Acrylonitrile | 22.0 | 22.0 | 22.0 | 22.0 | 27.0 | 27.0 | 27.0 |
| | | Methacrylic acid | 4.0 | 4.0 | 4.5 | 5.0 | 4.0 | 4.0 | 4.0 |
| | | Methacrylamide | 2.0 | 2.0 | - | - | 2.0 | 2.0 | 4.0 |
| | | Acrylamide | - | - | 2.0 | - | - | - | - |
| | MEK-insoluble content (% by weight) | | 56.1 | 56.1 | 62.5 | 42.0 | 52.3 | 52.3 | 44.0 |
| Crosslinking agent | Epoxy (EX-321) (parts by weight) | | 0.5 | 1.0 | 1.0 | 0.5 | 0.5 | 1.0 | 0.5 |
| | Zinc oxide (parts by weight) | | 1.0 | 0.5 | 0.5 | 1.0 | 1.0 | 0.5 | 1.0 |
| Production conditions | Curing temperature (° C) | | 120 | 120 | 120 | 120 | 110 | 110 | 110 |
| | Curing time (min) | | 30 | 30 | 30 | 30 | 30 | 30 | 30 |
| | pH | | 10 | 10 | 10 | 10 | 10 | 10 | 10 |
| Physical properties of molded article | Thickness (mm) | | 0.057 | 0.073 | 0.068 | 0.058 | 0.054 | 0.06 | 0.056 |
| | 500% modulus (MPa) | | 9.69 | 4.84 | 5.2 | 26.4 | 12.5 | 6.4 | *1 |
| | Elongation rate (%) | | 641 | 675 | 665 | 510 | 615 | 670 | 490 |
| | Stress retention rate (%) | | *1 | 42.1 | 46.0 | 33.4 | 42.5 | 45.6 | 35.2 |

*1) indicates that the subject parameter was not measured.

[Table 2-2]

| | | | Experiment B8 | Experiment B9 | Experiment B10 | Experiment B11 | Experiment B12 | Experiment B13 |
|---|---|---|---|---|---|---|---|---|
| Elastomer | Formulation (parts by weight) | Butadiene | 68.5 | 68.5 | 62.0 | 62.0 | 62.5 | 62.5 |
| | | Acrylonitrile | 27.0 | 27.0 | 32.0 | 32.0 | 32.0 | 32.0 |
| | | Methacrylic acid | 4.5 | 4.5 | 4.0 | 4.0 | 5.5 | 5.5 |
| | | Methacrylamide | - | - | 2 | 2 | - | - |
| | | Acrylamide | - | - | - | - | - | - |
| | MEK-insoluble content (% by weight) | | 60.5 | 60.5 | 60.7 | 60.7 | 61.5 | 61.5 |
| Crosslinking agent | Epoxy (EX-321) (parts by weight) | | 0.5 | 1.0 | 0.5 | 1.0 | 0.5 | 1.0 |
| | Zinc oxide (parts by weight) | | 1.0 | 0.5 | 1.0 | 0.5 | 1.0 | 0.5 |
| Production conditions | Curing temperature (° C) | | 130 | 130 | 110 | 110 | 110 | 110 |
| | Curing time (min) | | 20 | 20 | 30 | 30 | 30 | 30 |
| | pH | | 10 | 10 | 10 | 10 | 10 | 10 |
| Physical properties of molded article | Thickness (mm) | | 0.058 | 0.062 | 0.055 | 0.057 | 0.061 | 0.06 |
| | 500% modulus (MPa) | | 14.3 | 13.2 | 11.4 | 9.85 | 22.4 | 18.9 |
| | Elongation rate (%) | | 560 | 585 | 608 | 655 | 560 | 590 |
| | Stress retention rate (%) | | 47.5 | 56.0 | 44.2 | 47.5 | 49.4 | 55.0 |
| *1) indicates that the subject parameter was not measured. | | | | | | | | |

From Table 2, it was again shown that, as compared to the dip molding compositions containing an elastomer not having an amide group, the dip molding compositions containing an elastomer having an amide group-containing monomer contributed to the elongation rate a molded article. In addition, in the case where acrylamide was used as the amide group-containing monomer, the same tendency was also observed as in those cases where methacrylamide was used, and the use of an amide group-containing monomer was thus shown to be important. Moreover, it was found that, as compared to the molded articles produced using a dip molding composition containing an elastomer having an MEK-insoluble content of less than 50% by weight, the molded articles produced using a dip molding composition containing an elastomer having an MEK-insoluble content 50% by weight or more had a higher stress retention rate.

<Experimental Examples C>

In Experimental Examples C, it was tried to produce a glove satisfying the ASTM D3577 Standard Specification for Rubber Surgical Gloves using XNBR in which crosslinked structures were introduced to a latex by performing crosslinking using an epoxy crosslinking agent and zinc oxide; however, since the elongation rate of the Standard could not be achieved by any means, the XYNBR of the present invention was used in an attempt of achieving the Standard. Incidentally, the ASTM D3577 Standard Specification for Rubber Surgical Gloves states as follows: tensile strength >17 MPa, elongation rate > 650%, and 500% modulus < 7 MPa for before aging; tensile strength > 12 MPa and elongation rate > 490% for after aging. When epoxy crosslinking and zinc crosslinking are performed, the numerical values are hardly reduced after aging; therefore, only the numerical values before aging are shown below as experimental results.
For reference, the XNBR and the XYNBR shown below had the following intrinsic properties (physical properties of a film crosslinked only by coagulant-derived calcium without any crosslinking agent).

[Table 3]

| Elastomer | | | | XNBR | XYNBR(C) |
|---|---|---|---|---|---|
| Elastomer | Formulation (% by weight) | Butadiene | | 74.0 | 72.0 |
| | | Acrylonitrile | | 22.0 | 22.0 |
| | | Methacrylic acid | | 4.0 | 4.0 |
| | | Methacrylamide | | 0 | 2.0 |
| | MEK-insoluble content (% by weight) | | | 67.0 | 56.1 |
| | Mooney viscosity | | | MS103 | ML108 |
| Intrinsic properties | 500% modulus (MPa) | | | 4.62 | 3.71 |
| | Elongation rate (%) | | | 726 | 781 |

From the results shown in Table 3, the following was found.
It was found that the intrinsic properties of the XYNBR were improved in terms of 500% modulus and elongation rate as compared to those of the XNBR not containing methacrylamide. In Experimental Examples C, the amount of acrylonitrile and that of methacrylic acid were reduced so as to improve the elongation and the flexibility. Further, with regard to the amounts of crosslinking agents, the added amount of zinc oxide was reduced.
The experimental results are shown below.

[Table 4-1]

| | | Experiment C1 | Experiment C2 | Experiment C3 | Experiment C4 | Experiment C5 | Experiment C6 |
|---|---|---|---|---|---|---|---|
| Elastomer | | C | C | C | C | C | C |
| Crosslinking agent | Epoxy (EX-321) (parts by weight) | 1.0 | 1.0 | 1.0 | 1.0 | 1.0 | 1.0 |
| | Zinc oxide (parts by weight) | 0.5 | 0.5 | 0.5 | 0.5 | 0.5 | 0.5 |
| Production conditions | Curing temperature (° C) | 100 | 120 | 130 | 100 | 120 | 130 |
| | Curing time (hr) | 30 | 30 | 30 | 30 | 30 | 30 |
| | pH | 10.0 | 10.0 | 10.0 | 10.0 | 10.0 | 10.0 |
| Physical properties of molded article (no aging) | Thickness (mm) | 0.068 | 0.073 | 0.075 | 0.066 | 0.057 | 0.060 |
| | 500% modulus (MPa) | 4.24 | 4.84 | 5.33 | 4.36 | 5.28 | 5.3 |
| | Elongation rate (%) | 710 | 675 | 640 | 704 | 669 | 652 |
| | Tensile strength (MPa) | 18.2 | 17.3 | 18.4 | 17.4 | 18.9 | 17.7 |

[Table 4-2]

| | | Experiment C7 | Experiment C8 | Experiment C9 | Experiment C10 | Experiment C11 |
|---|---|---|---|---|---|---|
| Elastomer | | C | C | C | C | C |
| Crosslinking agent | Epoxy (EX-321) (parts by weight) | 1.0 | 0.7 | 0.5 | 0.5 | 0.5 |
| | Zinc oxide (parts by weight) | 0.7 | 0.7 | 1.0 | 1.0 | 1.0 |
| Production conditions | Curing temperature (°C) | 120 | 120 | 100 | 120 | 130 |
| | Curing time (hr) | 20 | 20 | 30 | 30 | 30 |
| | pH | 10.0 | 10.0 | 10.0 | 10.0 | 10.0 |
| Physical properties of molded article (no aging) | Thickness (mm) | 0.062 | 0.060 | 0.067 | 0.057 | 0.058 |
| | 500% modulus (MPa) | 4.99 | 5.91 | 10.77 | 9.69 | 12.97 |
| | Elongation rate (%) | 675 | 677 | 637 | 641 | 581 |
| | Tensile strength (MPa) | 18.87 | 23.23 | 30.3 | 29.8 | 24.3 |

From Table 4, it was found that a molded article excellent in at least one property of modulus, elongation rate, or tensile strength was obtained in all of the experimental conditions. In addition, in Experimental Examples C, focus was given to whether or not an XNBR glove conforming to the ASTM D3577 Standard Specification for Rubber Surgical Gloves could be produced.

In Experiments C1 to C3 where the amount of the epoxy crosslinking agent and that of zinc oxide were set at 1.0 part by weight and 0.5 parts by weight, respectively, and gloves of about 4 g were produced at varying curing temperatures, the gloves of Experiments C1 and C2 satisfied the Standard.

In Experiments C4 to C6 where gloves of about 3.2 g were produced using the same blend of the crosslinking agents but at varying curing temperatures, all of the gloves satisfied the Standard.

In Experiments C7 and C8 where gloves of about 3.2 g were produced using 1.0 or 0.7 parts by weight of the epoxy crosslinking agent with zinc oxide in an amount increased to 0.7 parts by weight, both of the gloves satisfied the Standard.

In Experiments C9 to C11 where gloves of about 3.2 g were produced using 1.0 part by weight of the epoxy crosslinking agent with zinc oxide in an amount further increased to 1.0 part by weight at varying curing temperatures, none of the gloves satisfied the Standard.

From the above, it was found that, by adding methacrylamide to XNBR, a glove satisfying the ASTM D3577 Standard Specification for Rubber Surgical Gloves can be produced.

It is noted here that, even when the ASTM D3577 Standard Specification for Rubber Surgical Gloves is not satisfied, it was found that a glove having favorable flexibility and elongation can be produced depending on an embodiment.

<Experiments D>

Ultrathin gloves (about 2 g) exhibit a strength only when they are produced from a linear latex that is a cool rubber. Experiments D were aimed at examining if a certain strength (around 6 N) can be obtained in an ultrathin XYNBR using a hot-rubber branched latex. In the formulations of elastomers, acrylonitrile and methacrylic acid were added in

large amounts and zinc was also added in a large amount as a crosslinking agent, and these formulations were used for improving the strength. In Experiments D, the obtained molded articles were each further subjected to a treatment in which they were maintained at 35°C for 2 weeks.

The experimental results are shown in Table 5.

[Table 5]

| | | | Experiment D1 | Experiment D2 | Experiment D3 | Experiment D4 | Experiment D5 | Experiment D6 |
|---|---|---|---|---|---|---|---|---|
| Elastomer | Formulation (parts by weight) | Butadiene | 64.0 | 62.0 | 64.0 | 63.0 | 62.0 | 64.0 |
| | | Acrylonitrile | 30.0 | 30.0 | 30.0 | 30.0 | 30.0 | 28.0 |
| | | Methacrylic acid | 6.0 | 6.0 | 5.0 | 5.0 | 5.0 | 6.0 |
| | | Methacrylamide | | 2.0 | 1.0 | 2.0 | 3.0 | 2.0 |
| | Physical properties | MEK-insoluble content (% by weight) | 63.5 | 65.1 | 66.7 | 66.0 | 62.4 | 67.8 |
| | | MEK swelling rate (times) | 33.9 | 25.6 | 26.7 | 24.6 | 22.9 | 23.6 |
| | | Mooney viscosity | ML124 | ML111 | ML96 | ML95 | ML124 | ML108 |
| Crosslinking agent | Epoxy (EX-321) (parts by weight) | | 0.5 | 0.5 | 0.5 | 0.5 | 0.5 | 0.5 |
| | Zinc oxide (parts by weight) | | 1.2 | 1.2 | 1.2 | 1.2 | 1.2 | 1.2 |
| Production conditions | Curing temperature (° C) | | 120 | 120 | 120 | 120 | 120 | 120 |
| | Curing time (min) | | 30 | 30 | 30 | 30 | 30 | 30 |
| Physical properties of molded article (after aging) | Thickness (mm) | | 0.043 | 0.043 | 0.043 | 0.044 | 0.047 | 0.041 |
| | Elongation rate (%) | | 539 | *1 | 567 | 575 | 560 | *1 |
| | \| Tensile strength (MPa) | | 35 | 42 | 38 | 38 | 38 | 38 |
| | FAB (N) | | 5.0 | 5.5 | 5.3 | 5.4 | 6.1 | 5.8 |
| | Tear strength (MPa) | | 45.8 | 66.7 | 58.2 | 64.4 | 73.9 | 54.6 |
| *1) indicates that the subject parameter was not measured. \| | | | | | | | | |

From Table 5, the molded articles produced using a dip molding composition containing an elastomer having a structural unit derived from a methacrylamide group-containing monomer were confirmed to be capable of exhibiting a sufficient strength even when they are in the form of an ultrathin glove. It was found that these molded articles, even after being maintained at 35°C for 2 weeks, were excellent in tensile strength, FAB, and tear strength, particularly in tear strength, as compared to the molded article produced using a dip molding composition containing an elastomer not having such a structural unit. The conditions of maintaining each molded article at 35°C for 2 weeks were set to assume a case of maintaining the molded article in an ordinary storage environment for a period of about 3 months. In other words, it was found that a molded article produced from the composition according to the present embodiment has excellent physical properties even when it is delivered to the hands of a consumer after being stored for a certain period after its molding.

As described above, according to the present invention, the followings can be provided by using a nitrile rubber elastomer containing a carboxyl group and an amide group: a dip-molded article that is excellent in at least one property of strength, elongation, flexibility, or stress retention rate; and a dip molding composition and a method that are used for the production of the dip-molded article.

## Claims

**1.** A dip molding composition, comprising at least a nitrile rubber elastomer containing a carboxyl group and an amide group,
wherein

the elastomer comprises 50% by weight or more, 78% by weight or less of a conjugated diene monomer-derived structural unit, 17% by weight or more, 35% by weight or less of an ethylenically unsaturated nitrile monomer-derived structural unit, 2.0% by weight or more, 8.0% by weight or less of an ethylenically unsaturated carboxylic acid monomer-derived structural unit, and 0.5% by weight or more, 5.0% by weight or less of an amide group-containing monomer-derived structural unit, and
the elastomer has an MEK-insoluble content of 50% by weight or more, 80% by weight or less.

**2.** The dip molding composition according to claim 1, further comprising at least:

an epoxy crosslinking agent comprising an epoxy compound that contains three or more glycidyl ether groups in one molecule and has a basic skeleton containing an alicyclic, aliphatic, or aromatic hydrocarbon; and
a pH modifier,
wherein the epoxy crosslinking agent has an MIBK/water distribution ratio of 50% or higher as determined by the following measurement method:

Method of measuring the MIBK/water distribution ratio: in a test tube, 5.0 g of water, 5.0 g of methyl isobutyl ketone (MIBK), and 0.5 g of the epoxy crosslinking agent are precisely weighed and mixed with stirring at 23°C $\pm$ 2°C for 3 minutes, and the resulting mixture is centrifuged at $1.0 \times 10^3$ G for 10 minutes and thereby separated into an aqueous layer and an MIBK layer, after which the MIBK layer is fractionated and weighed to calculate the MIBK/water distribution ratio using the following equation:

$$\text{MIBK/water distribution ratio (\%)} = (\text{Weight of separated MIBK layer (g)} - \text{Weight of MIBK before separation (g)})/\text{Weight of added crosslinking agent (g)} \times 100$$

this measurement is performed three times, and an average value thereof is defined as the MIBK/water distribution ratio.

**3.** The dip molding composition according to claim 1 or 2, wherein, in the elastomer, the content ratio of the ethylenically unsaturated carboxylic acid monomer-derived structural unit is 3.5% by weight or more, 6% by weight or less, and the content ratio of the amide group-containing monomer-derived structural unit is 1% by weight or more, 3% by weight or less.

**4.** The dip molding composition according to any one of claims 1 to 3, wherein the content ratio of the ethylenically unsaturated nitrile monomer-derived structural unit is 20% by weight or more, 30% by weight or less.

**5.** The dip molding composition according to any one of claims 1 to 4, wherein the MEK-insoluble content of the elastomer is not less than 60% by weight.

**6.** The dip molding composition according to any one of claims 1 to 5, wherein the amide group-containing monomer-derived structural unit is a structural unit derived from an *N*-alkylamide monomer or an *N*-alkyl ketone amide monomer.

**7.** The dip molding composition according to claim 6, wherein the structural unit derived from an *N*-alkylamide monomer or an *N*-alkyl ketone amide monomer is a (meth)acrylamide monomer-derived structural unit or a diacetone acrylamide monomer-derived structural unit.

**8.** The dip molding composition according to any one of claims 1 to 7, wherein the epoxy crosslinking agent is added in an amount of 0.3 parts by weight or more, 2.5 parts by weight or less with respect to 100 parts by weight of the elastomer.

**9.** The dip molding composition according to any one of claims 1 to 8, wherein the pH is adjusted to be 9.0 or higher, 10.5 or lower by the pH modifier.

**10.** The dip molding composition according to any one of claims 1 to 9, further comprising a metal crosslinking agent, wherein the metal crosslinking agent is zinc oxide.

**11.** The dip molding composition according to claim 10, wherein zinc oxide is added in an amount of 0.2 parts by weight or more, 1.5 parts by weight or less with respect to 100 parts by weight of the elastomer.

**12.** The dip molding composition according to any one of claims 1 to 11, having an MEK swelling rate of 5 times or longer, 10 times or shorter.

**13.** A molded article, which is a cured product of the dip molding composition according to any one of claims 1 to 12.

**14.** The molded article according to claim 13, having a stress retention rate of 40% or higher as determined by the following measurement method:
Method of measuring the stress retention rate: in accordance with ASTM D412, a test piece is prepared, marked with lines at a gauge mark distance of 25 mm, and stretched at a chuck distance of 90 mm and a tensile speed of 500 mm/min; once the test piece is stretched two-fold, the stretching is terminated to measure a stress M0; the test piece is maintained and a stress M6 is measured after a lapse of 6 minutes; and the stress retention rate is calculated using the following equation:

$$\text{Stress retention rate (\%)} = (M6/M0) \times 100.$$

**15.** The molded article according to claim 13 or 14, which is a glove.

**16.** A method of producing a molded article, the method comprising:

(1) the coagulant adhesion step of allowing a coagulant to adhere to a glove forming mold;
(2) the maturation step of preparing and stirring the dip molding composition according to any one of claims 1 to 12;
(3) the dipping step of immersing the glove forming mold in the dip molding composition;
(4) the gelling step of gelling a film formed on the glove forming mold to prepare a cured film precursor;
(5) the leaching step of removing impurities from the cured film precursor thus formed on the glove forming mold;
(6) the beading step of making a roll in a cuff portion of a glove to be obtained; and
(7) the curing step of heating and drying the cured film precursor at a temperature required for crosslinking reaction,

which steps (3) to (7) are performed in the order mentioned.

**17.** A dip molding composition, comprising at least:

a nitrile rubber elastomer containing a carboxyl group and an amide group;
an epoxy crosslinking agent comprising an epoxy compound that contains three or more glycidyl ether groups

in one molecule and has a basic skeleton containing an alicyclic, aliphatic, or aromatic hydrocarbon; and
a pH modifier,
wherein
the elastomer comprises 50% by weight or more, 78% by weight or less of a conjugated diene monomer-derived structural unit, 17% by weight or more, 35% by weight or less of an ethylenically unsaturated nitrile monomer-derived structural unit, 2.0% by weight or more, 8.0% by weight of an ethylenically unsaturated carboxylic acid monomer-derived structural unit, and 0.5% by weight or more, 5.0% by weight or less of an amide group-containing monomer-derived structural unit, and
the epoxy crosslinking agent has an MIBK/water distribution ratio of 50% or higher as determined by the following measurement method:
Method of measuring the MIBK/water distribution ratio: in a test tube, 5.0 g of water, 5.0 g of methyl isobutyl ketone (MIBK), and 0.5 g of the epoxy crosslinking agent are precisely weighed and mixed with stirring at 23°C ± 2°C for 3 minutes, and the resulting mixture is centrifuged at $1.0 \times 10^3$ G for 10 minutes and thereby separated into an aqueous layer and an MIBK layer, after which the MIBK layer is fractionated and weighed to calculate the MIBK/water distribution ratio using the following equation:

$$\text{MIBK/water distribution ratio (\%)} = (\text{Weight of separated MIBK layer (g)} - \text{Weight of MIBK before separation (g)})/\text{Weight of added crosslinking agent (g)} \times 100$$

this measurement is performed three times, and an average value thereof is defined as the MIBK/water distribution ratio.

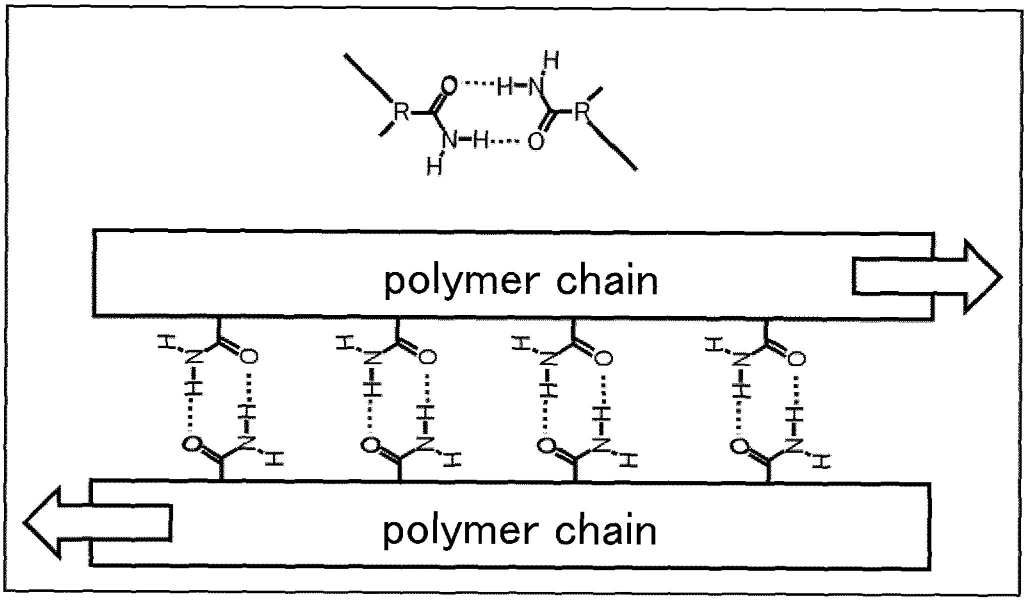


FIG. 1

## INTERNATIONAL SEARCH REPORT

International application No. **PCT/JP2021/035405**

### A. CLASSIFICATION OF SUBJECT MATTER

***C08L 13/02***(2006.01)i; ***B29C 41/14***(2006.01)i; ***B29C 41/36***(2006.01)i; ***C08G 59/42***(2006.01)i; ***C08K 3/22***(2006.01)i; ***C08L 63/00***(2006.01)i

FI: C08L13/02; C08K3/22; C08G59/42; B29C41/14; B29C41/36; C08L63/00 C

According to International Patent Classification (IPC) or to both national classification and IPC

### B. FIELDS SEARCHED

Minimum documentation searched (classification system followed by classification symbols)

C08K3/00-13/08; C08L1/00-101/14; C08G59/00-59/72; B29C41/00-41/36; B29C41/46-41/52; B29C70/00-70/88

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-149928 A (ZEON CORP.) 31 August 2017 (2017-08-31) claims, paragraphs [0016]-[0024], [0077], examples | 1-17 |
| X | WO 2014/034889 A1 (MIDORI ANZEN CO., LTD.) 06 March 2014 (2014-03-06) claims, paragraphs [0012]-[0016], [0030], examples | 1-17 |
| X | JP 2020-505492 A (LG CHEM, LTD.) 20 February 2020 (2020-02-20) claims, paragraphs [0006], [0007], [0028], [0058], examples | 1, 3-5, 9-16 |
| Y | | 2, 8, 17 |
| A | | 6-7 |
| Y | WO 2019/194056 A1 (MIDORI ANZEN CO., LTD.) 10 October 2019 (2019-10-10) claims, paragraph [0001] | 2, 8, 17 |
| Y | WO 2019/102985 A1 (MIDORI ANZEN CO., LTD.) 31 May 2019 (2019-05-31) claims, paragraph [0001] | 2, 8, 17 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **28 October 2021** | **16 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**

International application No.
**PCT/JP2021/035405**

**C. DOCUMENTS CONSIDERED TO BE RELEVANT**

| Category* | Citation of document, with indication, where appropriate, of the relevant passages | Relevant to claim No. |
|---|---|---|
| A | WO 2015/129871 A1 (MIDORI ANZEN CO., LTD.) 03 September 2015 (2015-09-03) entire text | 1-17 |
| A | JP 2017-160279 A (MIDORI ANZEN CO., LTD.) 14 September 2017 (2017-09-14) entire text | 1-17 |
| A | WO 2012/043894 A1 (KOSSAN SDN BHD) 05 April 2012 (2012-04-05) entire text | 1-17 |
| A | JP 11-293043 A (ROHM & HAAS CO.) 26 October 1999 (1999-10-26) entire text | 1-11 |
| A | JP 2008-512526 A (POLYMERLATEX GMBH) 24 April 2008 (2008-04-24) entire text | 1-17 |
| A | US 2011/0229646 A1 (LG CHEM, LTD.) 22 September 2011 (2011-09-22) entire text | 1-17 |
| A | US 2012/0149859 A1 (LG CHEM, LTD.) 14 June 2012 (2012-06-14) entire text | 1-17 |

Form PCT/ISA/210 (second sheet) (January 2015)

**INTERNATIONAL SEARCH REPORT**
**Information on patent family members**

International application No.
**PCT/JP2021/035405**

| Patent document cited in search report | Publication date (day/month/year) | Patent family member(s) | Publication date (day/month/year) |
|---|---|---|---|
| JP 2017-149928 A | 31 August 2017 | US 2019/0177517 A1<br>claims, paragraphs [0030]-[0046], [0103], examples<br>EP 3421532 A1<br>CN 108602991 A<br>KR 10-2018-0114064 A | |
| WO 2014/034889 A1 | 06 March 2014 | US 2015/0218352 A1<br>claims, paragraphs [0017]-[0021], [0035], examples<br>EP 2891668 A1<br>CN 104768985 A<br>TW 201420617 A | |
| JP 2020-505492 A | 20 February 2020 | US 2020/0040118 A1<br>claims, paragraphs [0008], [0025], [0056], examples<br>EP 3556785 A1<br>KR 10-2019-0067480 A<br>CN 110198964 A | |
| WO 2019/194056 A1 | 10 October 2019 | EP 3575357 A1<br>claims, paragraph [0001]<br>KR 10-2019-0117552 A<br>CN 110582534 A<br>TW 201943782 A<br>CA 3048822 A1 | |
| WO 2019/102985 A1 | 31 May 2019 | US 2021/0162636 A1<br>claims, paragraph [0001]<br>EP 3516974 A<br>CA 3042804 A<br>CN 110072401 A<br>KR 10-2019-0090395 A<br>TW 201927881 A<br>CA 3042804 A1 | |
| WO 2015/129871 A1 | 03 September 2015 | US 2017/0015819 A1<br>entire text<br>EP 3112411 A1<br>CN 106103570 A | |
| JP 2017-160279 A | 14 September 2017 | (Family: none) | |
| WO 2012/043894 A1 | 05 April 2012 | US 2013/0198933 A1<br>entire text<br>EP 2623529 A1<br>CA 2813161 A1<br>CN 103228688 A<br>KR 10-2013-0113466 A | |
| JP 11-293043 A | 26 October 1999 | US 2002/0082371 A1<br>entire text<br>EP 940433 A1<br>CN 1228453 A<br>KR 10-2000-0071588 A | |
| JP 2008-512526 A | 24 April 2008 | WO 2006/027164 A1<br>entire text<br>EP 1634894 A1 | |

Form PCT/ISA/210 (patent family annex) (January 2015)

**INTERNATIONAL SEARCH REPORT**
**Information on patent family members**

International application No.
**PCT/JP2021/035405**

| Patent document cited in search report | Publication date (day/month/year) | Patent family member(s) | Publication date (day/month/year) |
|---|---|---|---|
| | | CN 101014628 A | |
| | | KR 10-2007-0114106 A | |
| | | KR 10-1259200 B1 | |
| US 2011/0229646 A1 | 22 September 2011 | KR 10-2010-0035191 A | |
| | | CN 102159604 A | |
| US 2012/0149859 A1 | 14 June 2012 | KR 10-2010-0133638 A | |
| | | CN 102459370 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012043894 A
- WO 2017217542 A
- WO 2019194056 A
- JP 2018009272 A